# EUROPEAN PATENT APPLICATION

(11) **EP 1 814 268 A1**
(43) Date of publication of application: **01.08.2007**
(21) Application number: 06001701.9
(22) Date of filing: 27.01.2006
(51) Int. Cl.: H04L 12/56

(54) **Method and advanced system for secure multi-channel transfer of data to potentially mobile units**

(71) Applicant: Niantschur, Stefan, 80807 München (DE); Wilkinson, Braddley, 85625 Glonn (DE)
(72) Inventor: Niantschur, Stefan, 80807 München (DE); Wilkinson, Braddley, 85625 Glonn (DE)
(74) Representative: Gigerich, Jan

(57) **Abstract**

The present invention relates to a method and device for transmitting user data securely over at least two different communication links. User data to be transmitted are received by the first communication device. The user data are processed for transmission over at least two communication links. The processed user data are then transmitted over the at least two communication links, whereby at least part of the user data is transmitted over at least two communication links. Furthermore, the invention relates to a method and device for receiving user data over at least two different communication links. Transmission units are received by the second communication device via at least two communication links carrying portions of transmitted user data, whereby at least part of the user data is received via at least two communication links. From the received transmission units data segments are extracted and subsequently reassembled into the original user data.

## Description

### Background of the Invention

The present invention relates to data transmission. In particular, the present invention relates to a method and device for transmitting user data from a first communication device to a second communication device over at least two different communication links and to a method and device for receiving user data from a first communication device by a second communication device over at least two different communication links.

Updating remote objects is very desirable in different scenarios today. As an example, as the dependencies between multiple parts of hardware in a car are becoming increasingly complex, car producers need to be able to guarantee the integrity of software updates within a car. Usually software updates can only occur when the car is parked at a dealer. However, if severe problems have been recognized, manufacturers need to call-back cars. This may have serious impact on the company's image, whereas remote and reliable software updates may increase the customers faith in the brand's quality.

### Summary of the Invention

The present invention is directed to a method for transmitting user data from a first communication device to a second communication device over at least two different communication links. User data is processed for transmission over at least two communication links, and the processed user data is transmitted over the at least two communication links, whereby at least part of the user data is transmitted over at least two communication links. Advantageously, this enables the transfer of data to continue even when one of the links originally employed becomes unavailable. In addition to that, the number of links improves the overall bandwidth available to the communication and/or enables redundancy to be added by sending the same user data over multiple links either simultaneously or time dispersed or on-demand from the receiving unit in case of missing parts of data.

According to a preferred embodiment, an initial step of receiving the user data to be transmitted is performed by the first communication device. This is advantageous, if the first communication device does not generate the user data to be transmitted, which may also be possible.

In a preferred embodiment of the present invention, at least a first data portion of the user data is processed for transmission over a first communication link and at least a second data portion of the user data is processed for transmission over a second communication link. Subsequently, the first data portion is transmitted over a first communication link and the second data portion is transmitted over the second communication link of the at least two communication links. This has the advantage that the communication between the first communication device and the second communication device is independent from a permanently available single communication link. Especially in areas with pure infrastructure this might be the only way to feed the second communication device with large user data.

According to another embodiment of the present invention, a segment size is determined and the user data is split into data segments of the determined segment size. Furthermore, the maximum number of data segments fitting into respective transmission units provided by each communication link to be used for transmission is determined and respective payloads for the transmission units of each communication link used for transmission are formed. This has the advantage that the available transmission capacity (bandwidth) of each communication link is used to a very high extent. So called slack is minimized. Also the segmentation eases the identification of missing parts of user data and their collection from any of the employed communication links or a request for resend if that is appropriate within the individual usage case.

Preferably, an effective payload size of the transmission units provided by each communication link to be used for transmission is determined and the greatest common divisor of the determined effective payload sizes is calculated and used as the segment size. Advantageously, this allows the communication to adapt to different channel characteristics and exploit the combined channel bandwidths near the optimum without adding complex protocol calculations and data assembly algorithms that impede embedded use within low specification, and thus relatively cheap, devices.

Preferably, header information is added to the respective number of data segments identifying a sub-set or all of: the number of data segments in the transmission unit, identification of the portion of user data in the transmission unit, sequence numbers of data segments in the transmission unit, security information, priority information, identification of a target device and identification of a group of target devices. This has the advantage that data availability, source and destination, integrity and authenticity can be derived without decryption of the actual payload. Thus, this greatly reduces the computational and storage requirements for the technical implementation. Once the payload has been decrypted, the above mentioned information can be verified so that even very sophisticated tampering of the communication packets may only increase the computational requirements but not compromise the communication or expose secret data.

In another aspect of the present invention, a communication link description is received by the first communication device, identifying at least one of the following properties: a measure of communication link reliability, a measure about expected transmission time, a measure about bandwidth, a measure about expected communication costs, an indication about duplex capabilities, a measure about the maximum payload size per transmitted transmission unit, maximum payload size per transmitted data packet. This advantageously allows the devices to adapt to the eventually changing parameters of the communication link and choose cheaper or more reliable links depending on the data to be transferred and the availability of those communication links.

According to a preferred implementation of the present invention, the communication links to be used for the transmission are selected. Preferably, available communication links are determined. From the group of available links a set of a predetermined number of communication links having at least one of the following characteristics are selected: links with the highest reliability, links with the least expected transmission time, links with the highest bandwidth, the links with the least expected communication costs; using the determined set of communication links for transmitting the user data. This - either static or continuous - optimisation will adapt the characteristics of the communication to the profile of the data to be transferred, e.g., increasing the throughput for very urgent data or reducing the overall cost of communication for data that is to be transferred at the lowest possible cost within a given time frame.

In another embodiment of the present invention, a user data description is received by the first communication device, identifying at least one of the following: addressee of the user data, sender of the user data, priority of the user data, authentication to be used, encryption to be used, communication links to be used, packet size to be used, transmission protocols to be used, reverse communication link to be used. This advantageously allows the initially receiving communication unit to identify information it needs in order to receive and process the user data. Furthermore, the communication unit can be instructed on how to process the raw communication transmission units and where missing elements of user data may become available. Raw communication transmission units are transmission units that have not yet been processed. This has the advantage that received transmission units can be dropped immediately before being processed.

Another aspect of the present invention refers to a method for receiving user data from a first communication device by a second communication device over at least two different communication links. Transmission units are received by the second communication device via at least two communication links carrying portions of transmitted user data, whereby at least part of the user data is received via at least two communication links. From the received transmission units data segments are extracted and subsequently reassembled into the user data. Advantageously, the full user data can be reconstructed from the received segments and intentional blocking of communication (i.e. Jamming) over a given single communication link would not affect the ability to receive user data over a different other communication link.

According to a preferred embodiment of the present invention, a data segment received via a first communication link is discarded, if it has already been received via a second of the at least two communication links. This has the advantage that redundant data segments not needed because of intact communication links are quickly removed from processing and save computing time and do not wear the storage system (e.g. FLASH memory or magnetic recording) by overwriting like for like.

According to another implementation of the present invention, the reception of a transmission unit from a communication link is rejected, if the respective transmission unit contains data segments already received via at least one other communication links. This allows saving bandwidth on the communication channel.

According to another preferred embodiment of the present invention, at least two communication links of all communication links being used for the transmission of the user data are selected for receiving the user data. Preferably, a different communication link being used for receiving the user data is selected, if a previously used communication link shows at least one of the following conditions: the communication link becomes unavailable, the signal strength falls below a predetermined threshold, the bit error rate exceeds a predetermined threshold, the data transmission speed falls below a predetermined threshold. This advantageously allows the communication to continue uninterrupted as long as at least one communication link is still available. Switching communication links before a complete loss of communication is given, allows to optimise the overall throughput of the communication.

According to a preferred embodiment of the present invention, the user data is delivered to at least one target device attached to the second communication device. Preferably, the delivery of the user data to the target device is delayed by the second communication device as long as the target device is not in a predetermined state. A predetermined state could be, e.g., a secure operating condition, a known physical environment or an "off" state. A state, indicating that a car is parked could be an implementation of such a state. As an advantage this allows the target device to be in a secure condition to allow the data transfer to happen without risk to the device, the service it provides or the people depending on that service.

According to another aspect of the present invention, device data is received from at least one of the target devices by the second communication device over the appropriate interface and sent via at least one communication link to the first communication device. This advantageously completes the invention to a two-way round trip type of communication process and significantly broadens the potential applications. A device can - for example - send status information on completed or failed internal processes or request additional transfers from the described communication infrastructure.

Furthermore, the present invention is related to a device for transmitting device data over at least two communication links, including an interface unit for receiving device data to be transmitted, a processing unit for processing said device data for transmission over at least two communication links and a transmission unit for transmitting said processed device data.

Furthermore, the present invention is related to a device for receiving user data over at least two different communication links, including a reception element for receiving transmission units via at least two communication links carrying portions of transmitted user data, whereby at least part of the user data is received via at least two communication links, an extraction unit for extracting from said received transmission units data segments, and a reassembling unit for reassembling said data segments into said user data.

This allows to securely and efficiently push information (e.g. data, programmes, control information and updates) out to mobile devices and any number of locally connected equipment greatly reducing the complexity of these processes by levelling different protocols, interfaces, bus systems, computer languages and data representations . The invention allows to obtain a near real time status of any mobile devices to manage fleets, battalions or swarms with precise information available on the mobile devices status.

### Brief Description of the Drawings

Fig. 1 shows a system for transmitting user data from a first communication device to a second communication device according to the present invention.
Fig. 2 illustrates the data flow according to a method for transmitting user data from a first communication device to a second communication device according to the present invention.
Fig. 3 shows a flow chart illustrating the transmission of user data according to the present invention.
Fig. 4 shows two alternative implementations of how to provide user data and meta data, also referred to as user description data, to the first communication unit, also referred to as base station.
Fig. 5 shows a data flow diagram depicting different implementations of providing user data to the base station.
Fig. 6 shows a data flow diagram depicting different implementations of providing meta data of the user data to the base station.
Fig. 7 shows a flow chart depicting a way to access data to load it to the base station.
Fig. 8 shows a flow chart depicting alternative implementations for selecting and loading data into the base station.
Fig. 9 shows a flow chart depicting the provision of pre-selected data to the base station.
Fig. 10 shows a flow chart illustrating the provision of meta data for pre-selecting data.
Fig. 11 shows a flow chart illustrating the provision of meta data and criteria for automatically selecting data.
Fig. 12 shows a flow chart illustrating the steps of manually collecting data to be fed into the base station.
Fig. 13 shows a flow chart illustrating the steps of automatically feeding data into the base station.
Fig. 14 shows a flow chart illustrating the steps of preparing data.
Fig. 15 shows a flow chart depicting the steps of prioritizing data.
Fig. 16 shows a flow chart illustrating the steps of selecting communication links.
Fig. 17 shows a flow chart illustrating the steps of calculating a segment size.
Fig. 18 shows a flow chart depicting the steps of determining payload size of transmission unit used by the respective communication links.
Fig. 19 shows a flow chart illustrating the steps of determining the effective payload size of transmission unit used by the respective communication links.
Fig. 20 shows a flow chart depicting the steps of determining the common segment size of all protocols used.
Fig. 21 shows a flow chart illustrating the steps of breaking down of the data.
Fig. 22 shows a flow chart illustrating the steps of accessing data on the base station.
Fig. 23 shows a flow chart depicting the steps of splitting the data into data segments having the determined size.
Fig. 24 shows a flow chart illustrating the steps of structuring the data segments.
Fig. 25 shows a flow chart illustrating the steps of forwarding the pre-processed data to be transmitted via the respective communication links.
Fig. 26 shows a flow chart illustrating the steps of combining data segments.
Fig. 27 shows a flow chart depicting the steps of encrypting the combined data segments.
Fig. 28 shows a flow chart illustrating the steps of adding a header to the payload.
Fig. 29 shows a flow chart illustrating the steps of forwarding the prepared data to be transmitted via the respective communication links.
Fig. 30 shows a flow chart depicting the steps of receiving data.
Fig. 31 shows a flow chart depicting the steps of choosing a communication link for reception.
Fig. 32 shows a flow chart illustrating the steps of polling the communication links.
Fig. 33 shows a flow chart depicting the steps of selecting a communication link according to pre-defined characteristics.
Fig. 34 shows a flow chart illustrating the steps of receiving data.
Fig. 35 shows a flow chart depicting the steps of collecting data.
Fig. 36 shows a flow chart depicting the steps of determining the respective treatment for each received data packet.
Fig. 37 shows a flow chart illustrating the steps of requesting missing data segments.
Fig. 38 shows a flow chart illustrating the steps of preparing data for subsequent use.
Fig. 39 shows a flow chart depicting the steps of reassembling the received data.
Fig. 40 shows a flow chart illustrating the steps of inserting data into a hierarchical queue.
Fig. 41 shows a flow chart illustrating the steps of forwarding data to connected target devices.
Fig. 42 shows a flow chart depicting the steps-wise processing of data.
Fig. 43 shows a flow chart illustrating the steps of automatic processing.
Fig. 44 shows a flow chart depicting the steps of sending feedback over pre-selected communication links.
Fig. 45 shows a flow chart illustrating the steps of preparing feedback data.
Fig. 46 shows a flow chart illustrating the steps of polling communication links used for transmitting feedback data.
Fig. 47 shows a flow chart illustrating the steps of sending feedback data.
Fig. 48 shows the structure of the data encapsulation and header scheme.
Fig. 49 shows details of the communication unit.

### Detailed Description

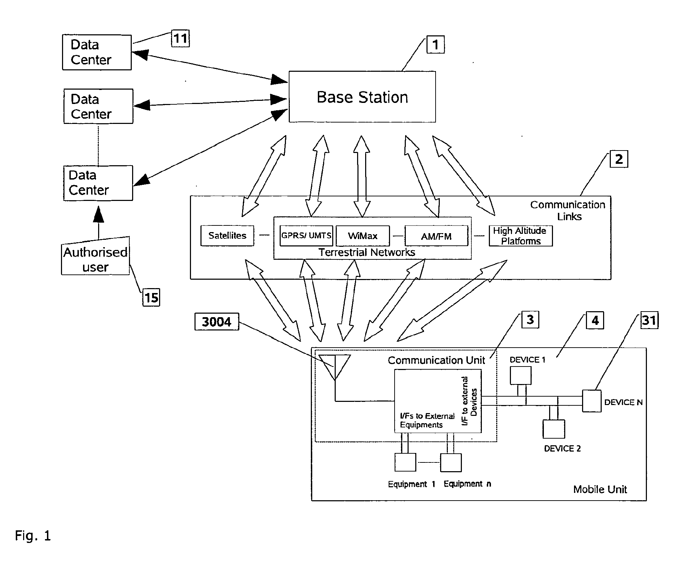

With reference to Fig. 1, a system for transmitting user data from a first communication device to a second communication device according to the present invention is shown.

The first communication device is formed by a base station 1. The base station is adapted to access, store and prepare data as well as to send and receive data through multiple communication links. The data is either sent by the base station itself or delivered to a provider via appropriate interfaces and the provider transfers the data on behalf of the base station. To push the data into multiple potentially moving mobile units 4 one or more base stations 1 may be used, which are in a position to collect the data from one source or different sources, consolidate the data and deliver the consolidated data through one or more communication links 2 to the communication unit 3. The user data may be provided by a data centre 11, which may either be an integral part of the base station 1 or which may be connected to the base station 1 via a respective communication link. This gives (depending on the case) customers the flexibility to provide interfaces to their already existing information sources and deliver the needed content to the base station 1 or to outsource their information source into the base station 1.

Within the base station 1 data transfers can be prioritised and queued in a hierarchical round robin queue according to urgency, interdependencies and/or allowed cost of transfer measured in an abstract form. Measured in an abstract form means that these factors are measured in an universally valid form. This has the advantage that a comparison of different parameters is possibly, for example a communication link can be selected which provides the optimum of monetary effort and achieved reliability. What the optimum is, has to be defined, according to the customer needs. The higher the queue position is, the earlier the transfer will be started. This may, e.g., result in critical updates being served first and optional updates commenced later. Data which is located at the same hierarchy level are processed in a round robin approach. The data transmission is performed using several communication links 2, i.e., the data is delivered over different communication links 2, and the communication unit 3 selects the data from the best reachable communication links 2. If the signal on one communication link 2 is lost, the communication unit 3 in the mobile unit 4 then selects the data to be received from a different communication link 2.

The data centre 11 in the simplest form may be formed by a computer system, e.g., a programmed personal computer, being adapted to pre-process the data into the form for delivery to the base station 1. The data centre 11 may be placed directly at the authorised user 15 premises with a suitable connection to the base station 1. Alternatively, the data centre 11 may be an integral part of the base station 1. The position of the data centre 11 within the described architecture depends on the overall data transfer system constraints of the given authorised user 15. Hence, the connection between the data centre 11 and the base station 1 may be formed by any communication link which allows for the secure transfer of information to the base station 1 or secure reception of feedback from the base station 1. Typical connections may be of the form of a local area network (LAN), telephone lines, Email, Internet or wireless communication.

The communication links 2 are the link between the transmitter (i.e. the base station 1) and the receiver (communication units 3) connected to potentially moving mobile units 4. The communication links are represented by the medium through which data is transmitted from the transmitter to the receiver and each communication link uses multiple protocols to control the transfer of data, e.g., the communication links 2 in a LAN can consist of CAT 5e cables and the communication uses protocols like TCP or UDP to control the transmission of any data.

In most cases the communication links 2 are using broadcast (one-to-all) or multicast (one-to-many) technology and guarantee that the data 12 is only sent to the right objects or group of objects, thus allowing the data to be transferred to multiple different clients (i.e. client awareness). Customers can buy a service to update a certain amount of or all of their communication units 3 or the devices 31 attached to it, within a particular period of time.

The communication unit 3 collects data 12 through any available communication link 2 (e.g. commercial channels like IP Networks, Satellite, GSM, UMTS etc.) and guarantees the integrity of the collected data. As the data 12 is collected from various sources each collection of data segments of data is checked for integrity and information about missing data segments are logged temporarily for future collection.

At the receiver the best (as an example in terms of signal strength or cost measured in a defined abstract form) and most reliable communication link 2 is selected by the communication unit 3 for receiving data. This is based upon a hierarchical round robin process in which each communication link 2 is questioned and the best is selected . The rating, according to a particular case, may be realized in that physical communication links 2, such as fibre glass cables, are rated higher than wireless communication links 2. If the communication link 2 breaks away the next best communication link 2 is used, each case my have its own definition what the next best communication link 2 is.

The communication unit 3 itself is positioned within a mobile unit 4 of any kind. The communication unit 3 forms the interface to the various devices 31 attached to it within the mobile units 4. The device 31 can be anything that requires or would like to deliver data.

As endpoint for the communication, the communication unit 3 collects the data from one or multiple communication links 2 either at the same time or sequentially. If one communication link 2 becomes unavailable the unit will try to receive the data 12 from an alternate communication link 2. In point-to-point mode the communication unit 3 can trigger resends of missing data segments, in point-to-multipoint mode the base station 1 is expected to provide redundancy and may contact individual communication units 3 that are missing from expected response schemes. With the knowledge contained in the encapsulation and security scheme 14 the communication unit 3 knows when the data 12 has arrived complete and intact. Executing a selected process on or with that data the communication unit 3 can commence once the defined prerequisites are also met, e.g., updating a firmware can start once the mobile unit 4 is in an "off' state. Under no circumstances may a running process interfere with normal operations of the moving mobile unit 4. Critical updates may also require human intervention 32, e.g., to test functionality once updates have been deployed. This human intervention 32 can be set as being available by a physical trigger (e.g. a network connection to the communication unit 3) or GNSS (GPS/Galileo/GLONASS) or similar location information and appropriate enforcement of the required business processes to be carried out.

While receiving 320 data 12 over multiple communication links 2, the communication unit 3 validates on the fly the integrity and security of the data based on the information delivered in the encapsulation and security scheme 14. Within this process 320 the communication unit 3 requests 323 missing data segments of the data from the base station 1 or collects 321 missing data segments of the data through other communication links 2.

When the data 12 is received complete and intact by the communication unit 3, the unit hierarchical event queue 332.4 releases the rebuilt data and forwards 340 the data 12 to connected devices running operations in either service or tunnel mode. Based on an internal decision structure using the information from the encapsulation and security scheme 14, the process 340 decides whether the data is pushed through to the intended devices 31 automatically 342 or whether human intervention 341, a known operating status or a known physical security is needed. If running in service mode, the communication unit 3 interprets the received data and starts the operations according to the information contained within the data 12 and depending on the actual state of the potentially moving mobile unit 4. The communication unit 3 provides a set of predefined services which can be used accordingly. If running in tunnel mode the communication unit 3 provides an unattended repair-or-upgrade mode. In this case the validated data received complete, intact and with necessary security level is automatically forwarded 342 to the attached devices 31.

Completed processes deliver feedback 19 from the communication unit 3 to the base station 1 or another certified communication source over either the same interfaces used for the initiation of the process or any other means available and appropriate. The base station is the primary start point of the communication. If, for example, a customer wants to have its own special base station it needs to be implemented correctly to be able to start the communication instead of the base station, this is the certified communication source. For example, a military use case might require that the communication source is only accessible for military personnel. Feedback of the process status may be delivered back to the source using every needed and capable communication link 2 starting with the communication link most likely to be successful (e.g. the communication link 2 which delivered the last package or most packages to the mobile unit 4. With the knowledge contained in the original data packets the communication unit 3 can decide on what feedback to provide - if any - once a process has been completed.

Multiple communication units 3 can be grouped together by adding their individual certificate to a certificate list in the base station 1. According to the members of that list the data to be transferred can be encrypted before being split and transferred or can be split, all data segments are then encrypted and transferred. Only communication units 3 which are valid recipients of the data are able to decrypt the data. The encapsulation and security scheme 14 provides information about valid recipients of the data.

Communication units 3 which are not meant to receive the data drop all related packets immediately. Communication units 3 which are valid recipients of the data receive all related packets as described above, request missing packets, decrypt the data packets and reassemble the original user data. Subsequently the user data is released via the unit's hierarchical event queue 332.4 and the process to forward 340 the data to connected devices is initiated for operations in service or tunnel mode.

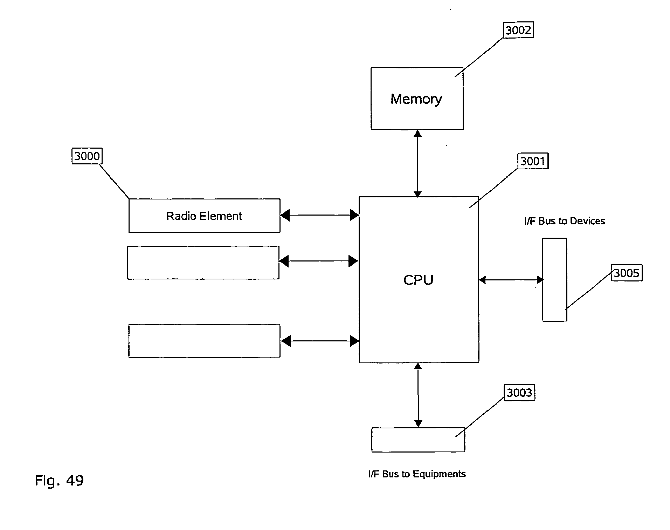

The architecture of the communication unit 3 itself is shown in Figure 49. This architecture consists of the appropriate radio elements 3000, cable links and other interfaces for the communication links 2 employed, a CPU 3001, Memory 3002 and interfaces 3005 to the attached devices 31 or external equipments 3003. The external equipments which can interface to the communication unit 3 can be anything from a workstation diagnostic platform or cellular phone to navigation equipment.

The radio element 3000 consists of all the high frequency and up/down conversion equipment which is needed to ensure proper reception of the data or transmission of the feedback 19 over the various communication links 2 implemented within the data transfer system. The demodulation or modulation functions are also performed within the radio element for the various communication links 2.

For each communication link 2, the demodulation function employed captures the received package information intended for the given communication link 2. This package information is then further processed within the radio element 3000 by removal of the commercial protocol employed for the specific communication link 2. The resultant data segments of the data as output of the processing are then passed on to the CPU 3001 for storage in the temporary memory 3002 designated for the given communication link 2. Within the CPU 3001 the various communication specific processes are then performed to rebuild the data from the various data segments stored within temporary memory 3002. The rebuilt data is then passed on to the attached devices 31 it is intended for through the given interface bus of the communication unit 3.

In a similar manner, the feedback data received by the radio element 3000 from the CPU 3001 is encapsulated within the given commercial protocol specific to the communication link 2 and then passed on to the modulation function for transmission of the feedback 19 to the base station 1.

As can be seen by the end-to-end architecture, the present invention relates to a secure and efficient method for data transfer between a base station 1 and one or more potentially moving mobile units 4 using a communication unit 3. The communication unit is capable of receiving data intended for the unit itself or devices attached to the unit (e.g. car brake system ABS) over various communication links 2 simultaneously or sequentially. The main purpose of the described data transfer method is to deliver data, e.g., firmware upgrades or computer programmes in a secure manner to and receive data, e.g., feedback from devices within potentially moving units.

Within this scenario the base station 1 may contain a data centre 11 to store the data 12 and which is also able to send 100 and receive 300 data over multiple links 2 such as satellite, UMTS, GSM or cable.

The base station 1 consists of hardware and software to:
1. Receive data from or to deliver feedback to the authorised users 15.
2. Ensure that the specific process within the data transfer system can be performed.
3. Simultaneously transmit data to or receive feedback from the communication unit 3 over the given communication links 2 employed within the system.

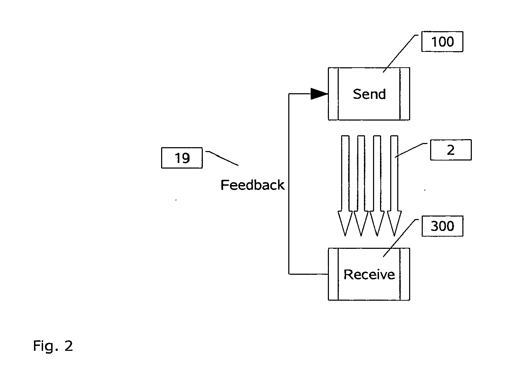

Fig. 2 illustrates the data flow according to a method for transmitting user data from a first communication device to a second communication device according to the present invention.

The employed communication links 2 can be anything from satellites or terrestrial networks (wired or wireless) to high altitude platforms which are commercially available today or in the future. The information diversity is given by the various communication links 2 employed within the data transfer system. The larger the amount of these communication links 2, the higher the information diversity delivered to the communication unit 3.

Various forms of communication possibilities exist within the communication architecture concept:
1. Point-to-point:
   Communication between the base station 1 and a specific communication unit 3.
2. Point-to-multipoint (multi-casting or broadcasting): For multi-casting, the communication is established between the base station 1 and a certain class of units accessible to a specific authorised user 15.

For broadcasting, there are two forms. The first form being communication between the base station 1 and all units belonging to a specific authorised user 15 or the second form being communication between the base station 1 and all units belonging to all authorised users.

Currently many different communication links 2 (e.g. cable or radio) and protocols (e.g. TCP, UDP), exist which allow for the transmission of any kind of data from the sender (source) to the receiver (sink). All the employed protocols have in common that they use either packets of predefined size as container for the data to be transferred or they delimit a stream with marks to define the start and end of the data. If the transmission fails, some protocols such as TCP, allow acknowledgement of missed packets by using a feedback over the same communication link from the receiver to the sender. The sender is then able to determine which packets need to be sent again.

Advantageously, the present invention allows the transmission to be shared between multiple protocols from the same or other levels of, e.g., the ISO/OSI model. If a re-transfer needs to take place, then the same and/or a different protocol may be used. Furthermore, it is able to use multiple protocols for the transmission of a given data set from the sender to the receiver over multiple communication links at the same time or sequentially. Advantageously, if the used communication link becomes unavailable during the transmission, the present invention allows continue transmission.

Sending data 100 may comprise various processes for preparing and prioritising user data and transferring it from one or multiple originators to one or multiple targets. When preparing the user data 12 it will be split into logically sequenced data segments of the same size which are sent over multiple communication links 2. The size of the data segments can be defined as the greatest common divisor of each effective payload of all protocols to be used for the transfer of the data. Other methods such as splitting the data into data segments of fixed size are also possible, e.g., splitting the data into data segments of 96 Bytes which is most likely to be transferred without the need of splitting the data segments during transmission. The advantage is that the payload of all protocols can be used efficiently. The steps to prepare the data are the same for all protocols employed and have to be performed only once for each data to be transferred, no matter how many protocols are to be used. Before sending, the data can be prioritised to influence the order of data transmission. High prioritised data are transferred before lower prioritised data. Prioritisation can take place before splitting the data into data segments or afterwards. The advantage of sending data this way is that the data is transferred reliably even in the case of loss of one or more communication links 2 during data transmission.

Receiving data 300 entails accepting the data from either one or multiple communication protocols. All logically sequenced data segments of the split data are received over any available communication link 2. Even if one or multiple communication links become unavailable during reception of the data, the data segments can be accepted over other active communication links. As soon as all data packets containing the needed data segments are received over any of the employed protocols, is the data reassembled and can be prioritised to influence the order when to forward the reassembled data to connected devices over the appropriate interfaces. Feedback to the first communication device (i.e. base station) about success of the operation and further information can be delivered over any communication link. Feedback 19 sent via a chosen communication link does not necessarily have to be the same communication link that was used to transfer the data from the base station 1 to the communication unit 3.

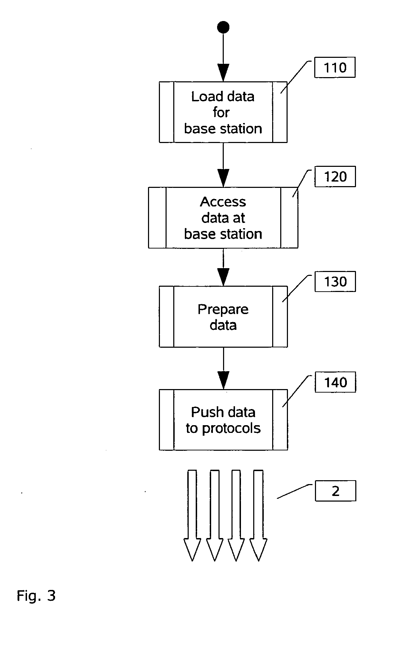

With reference to Fig. 3, a flow chart illustrating the transmission of user data according to the present invention is shown.

Sending data requires special steps to prepare the data in such a way that it can be sent over multiple protocols without losing context of information. The steps to send the data include acquiring the data 12 and securing access to the data with security mechanisms, such as a combination of user name and pass phrase, smart cards, client certificates, fingerprints and/or iris scans.

The advantage of the method of sending is that the data 12 can be sent either sequentially or at the same time over multiple protocols. Some of the cases might require encryption in which case an optional step for encrypting data will be performed. For some cases encryption within the process is not needed, e.g., when the communication link 2 is encrypted by itself. In this case the data, depending on the scenario at hand, may not be encrypted before sending.

Precondition: Data to be sent is available.

Postcondition: Data has been successfully sent over multiple communication links.

Action:
- Load data to a location which is available to the base station 110.
- Access data at the base station 120.
- Prepare the data at the base station 130.
- Push the data to the protocols (optionally encrypt the data) 140.

The data 12 may, e.g., be sent from a first communication device to a second communication device. The used protocol on one of the used multiple communication links may not allow encryption on a protocol level. Therefore the segments of the user data are encrypted before sending over multiple communication links 2.

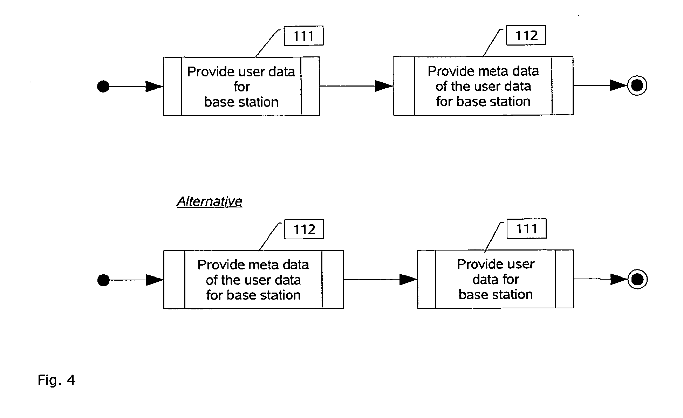

With reference to Fig. 4, two alternative implementations are shown of how to provide user data and meta data, also referred to as user description data, to the first communication unit, also referred to as base station.

Loading the data 12 to the base station means that the data must be made available for use on the base station. Before the data can be loaded to the base station it is required that the data is loaded to a device or a data centre which is able to provide the data to the base station. This device or data centre can be considered as a first stage in the process and allows security related processes to be run like validating the data. The steps for providing the data and related meta data can be arranged in any order.

Precondition: Data is available either from an external source like a data centre or from any removable media like tape devices.

Postcondition: Data and meta data of the user data is accessible through the base station.

Action:
- Provide data for base station 111.
- Provide meta data of the data for the base station, e.g., name of the data, location of storage, security information, size, etc. 112.

For example, in order to update various devices in a car via flash process, the manufacturer delivers the data to be flashed to the base station. The data is referred to as user data. It can be loaded to the base station and is available for further processes. A flash process denotes the way of updating an embedded device. For example, the BIOS , in a PC is usually updated with a flash process.

According to a preferred implementation, the data 12 may be provided on an optical storage medium like DVD, a magnetic storage like a tape or made available by access to a customer located storage system like a database at the customers head office site. It is also possible that the data can be provided using services from within a service oriented architecture (SOA).

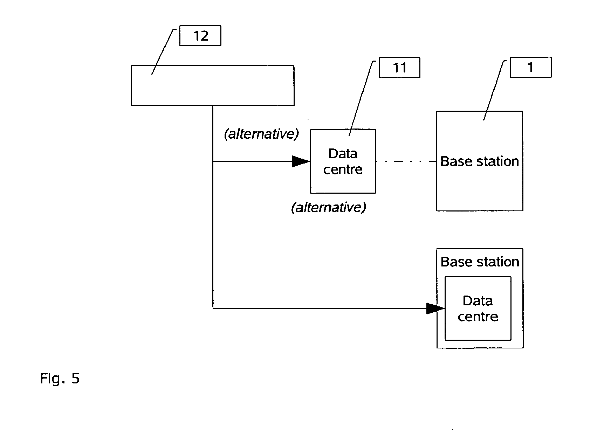

With reference to Fig. 5, a data flow diagram is shown depicting different implementations of providing user data to the base station.

External sources are either attached directly to the base station or indirectly. As the data is not per se present at the base station, it has to be provided to the base station at some point in time. In this step the data is either prepared into a state that it can be delivered to the base station or is is already present on a device attached to the base station.

Precondition: Data is available either from an external source like a data centre or from any removable media like tape devices.

Postcondition: Data is loaded to the data centre which is connected to the base station or to the base station itself.

Action: Use state of the art methods to load 111 the data to the data centre which is connected to the base station, or load the data to the base station, or insert removable media which contain the data to base station. One or more of the following methods to load the data may be employed: exports from a remote data base, copy data using file system operations of the operating system (copy & paste),or transfer remote data using data streams.

As an example, a healthcare organisation needs to update information on the routes to be taken by the various convoy trucks employed by the organisation. The organisation delivered the user data on a CD-ROM which is now inserted in a special device to read the contents from the CD-ROM and thus provides the user data to the base station.

According to a preferred implementation, the user data 12 could be on a tape and could be transferred via a tape device to the base station. Or it could be that a database query delivers the data which then is usable on at the base station. It is also possible that a data stream delivers the data to the base station where it is then stored within a database.

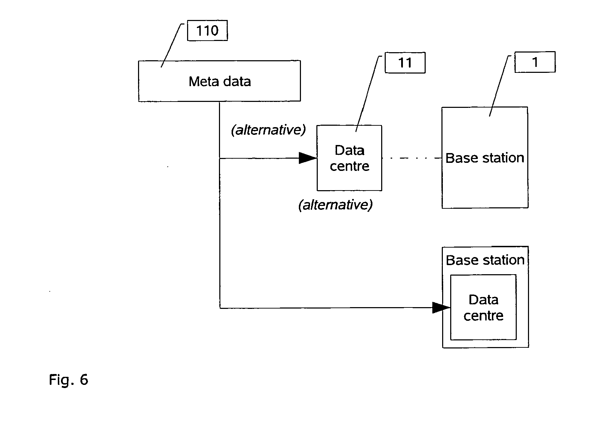

With reference to Fig. 6, a data flow diagram depicting different implementations of providing user data to the base station is shown.

The meta data 110 contains information which describe the user data 12, its intended use and other information. It can be provided to the base station along with the user data to make sure that the succeeding steps have enough information to process the user data.

Precondition: Data is available either from an external source like a data centre or from any removable media like tape devices.

Postcondition: Meta data of the data is accessible through the base station.

Action: Provide meta data 110/112 of the user data 12 for the base station 1, e.g., name of the data, location of storage, security information and size. Meta data is accessible through information which is immanent of the data or external means like text files or similar.

As an example, a car rental company wants to update the navigating systems of their cars with the most recent maps. They provide the maps as user data to the base station and deliver a description of the maps in an additional file. This description shows the size of the maps and their version. Update processes can decide upon processing of the provided maps with the knowledge from the meta data.

In most cases the meta data will be stored in text files which can be used to work on the data. It is also possible that the meta data is derived from the contents of the data 12 itself, i.e., all needed information is within the data, e.g., a compressed file can contain this information within a special file. It is also possible that the meta data is brought to the base station with a service from a service oriented architecture (SOA). It is also possible that the meta data is provided manually by the knowledge of an authorised person 15.

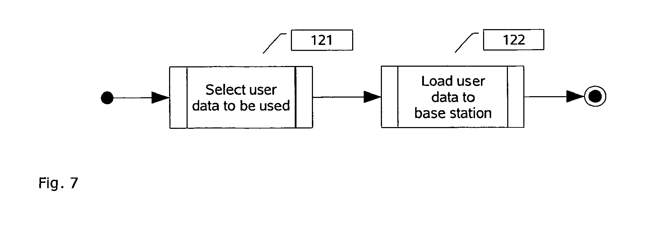

Fig. 7 shows a flow chart depicting a way to access data at the base station.

The data 12 which is available at the base station 1 may have to be accessible for further use. It requires not only that the data is already loaded to the base station but that it is identifiable unambiguously. With the following two steps the data can be accessed on the base station and is available for further processes.

Precondition: Data to be sent is available for the base station.

Postcondition: Data to be sent is available at the base station for preparation.

Action:
- Select 121 data 12 either automatically 121.2 or manually 121.1 through an interface such as web browsers.
- Use state of the art methods to load the data to the base station. Loading means push the data into memory, cache, storage, file system, data bases or any other means which are appropriate to hold the data.

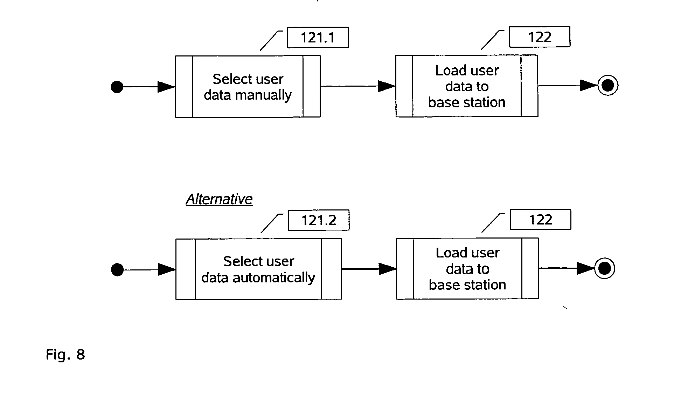

With reference to Fig. 8, a flow chart depicting alternative implementations for selecting and loading data into the base station is shown.

The selection process can be done by, e.g., identify unambiguously the data by use of its meta data.

Precondition: Data to be sent and meta data is available for the base station.

Postcondition: Choice of data to be used is made.

Action: Either manually 121.1 or automatically 121.2 select the data 12 to be loaded to the base station 1. The choice can be made by, e.g., selecting the data by its name, priority settings from the meta data, membership of the receiver in a special group.

An authorised user 15 may log on to the base station and uses an electronic form to provide the name of the user data to be used. An automatic process selects the user data which is meant to be delivered to a special group of devices. Which group of devices are meant to be updated is described in the meta data. This information is used by the automatic process to identify the user data to be used.

The data can be selected by its name, its owner, target group of devices, size or any other meta information which allows to distinctly identify the desired data.

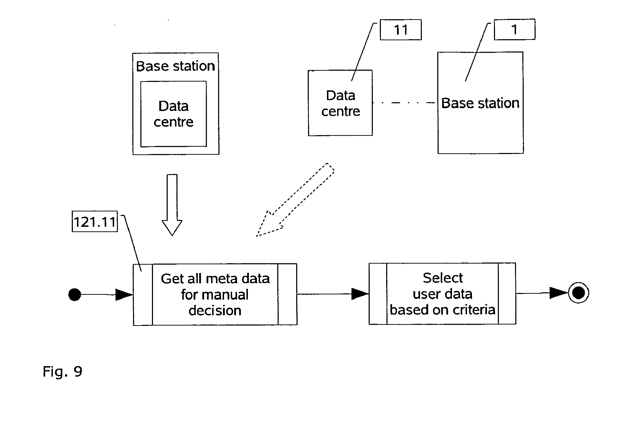

With reference to Fig. 9, a flow chart depicting the provision of pre-selected data to the base station is shown.

Meta data 110 from the base station as basis for the decision upon which user data to send over the base station is retrieved. With the information provided within the meta data an user can decide which data to use.

Precondition: Data to be sent and meta data are ready for use at the base station.

Postcondition: Choice of data to be used is made.

Action: Retrieve all meta data for the decision. Use the information provided by the meta data to decide which data is to be used.

As an example, a truck fleet owner may want to update certain trucks of the fleet. He loads an electronic form at the base station which allows him to access the meta data belonging to the user data. He then can decide, by selecting an entry of the form, to use the data which updates all trucks with a weight over 15 tons.

According to a preferred implementation, the base station runs a web server which provides html forms to select the user data. It is also possible to use a smart phone to browse through the html form. It is also possible to trigger a special web-service from within a SOA architecture. The service is started with parameters which describe the data to be used.

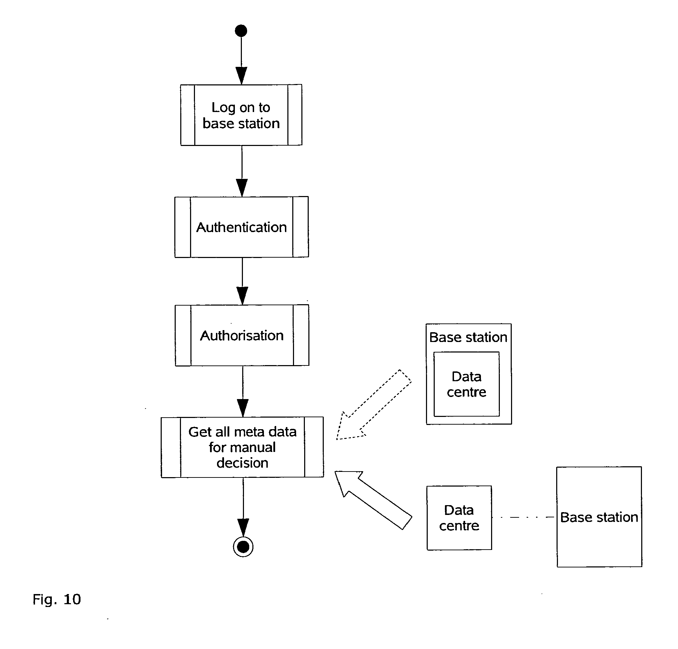

Fig. 10 shows a flow chart illustrating the provision of meta data for pre-selecting data.

Before the manual selection process can be started, the user logs onto the base station and authenticates. When the user is recognized he is authorised for predefined operations. Having the necessary rights, the user is enabled to access the meta data on the base station, which allows him to select the data to be used.

Precondition: Meta data is ready for use at the base station.

Postcondition: Choice of the data to be used is available.

For example, the tariff system of a public transport system shall be updated. A member of the public transport system logs on to the base station using a smart card. With the smart card he can unambiguously be identified. After the identification the system authorises the user for access to the meta data. If the user has the right to access the meta data 110 he can read the information provided within the meta data to select the user data to be sent.

The authentication may be done by using a smart card or any other means which are applicable to identify the person. It is also possible that the user uses a combination of user-name and password to identify himself. It is also possible that the user identifies himself by a certificate which is stored on the computer he uses to access the meta data. It is also possible that the user identifies himself using biometric means, e.g., the user can provide his fingerprint to the base station using a mouse with fingerprint scanner. The user might also be identified by an iris scan reader which is attached to the base station.
The authorisation can be done by, e.g., querying a security provider which has the information about the users and their rights. It is possible to use a meta directory to get this information from the customer to the base station which then can do the authorisation of the user based upon this information.

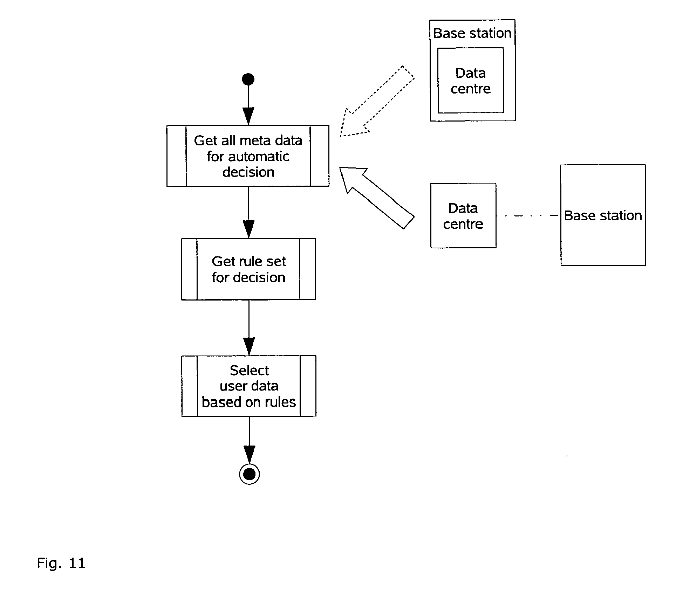

With reference to Fig. 11, a flow chart illustrating the provision of meta data for automatically selecting data is shown.

Before the user data is processed, the process retrieves the information about the user data from the meta data. When the meta data is accessible by the process it can load a rule set which allows to decide upon which data to use. By evaluating the rules, the automatic process knows exactly which user data to send.

Precondition: Meta data is ready for use on the base station.

Postcondition: Choice of the data to be used available.

For example, to update telematics information for all luxury cars, a car manufacturer provides the user data and meta data to the base station. An automatic process reads the meta data and selects the data containing traffic information because of their importance to the drivers of the cars. The information which data contains traffic information is provided by the meta data.

Preferably, an ASCII file contains all meta information about the user data. It is read into memory of the base station by an automatic process. It is also possible that the information is provided in binary form. It is also possible that the information is provided in a special structured file as, e.g., XML files. The information can also be provided as UTF16 compliant text.

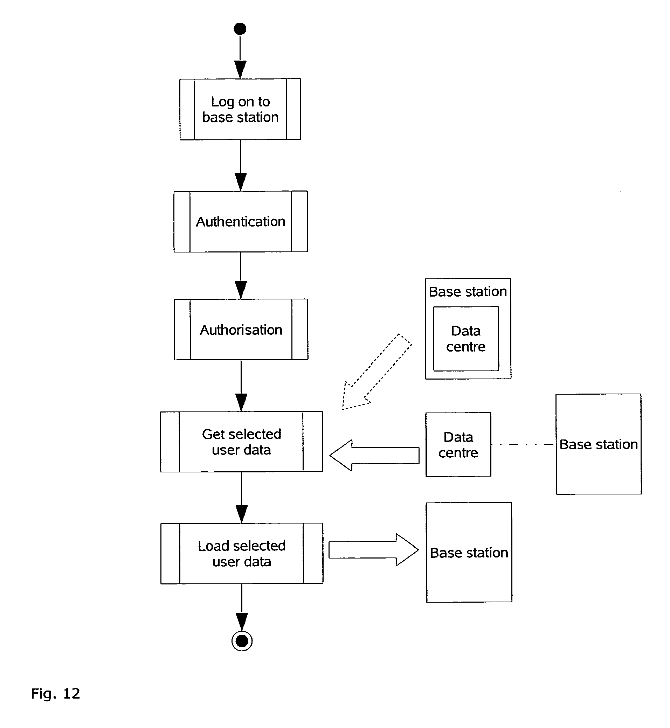

With reference to Fig. 12, a flow chart illustrating the steps of collecting data to be fed into the base station is shown.

Either the data is already present in a special device which is attached to the base station, e.g., the data is on a tape and the tape is in the tape device attached to the base station, or on the other hand the data can still be on a remote device, service, database, or any other means to store and provide the data to the base station. Subsequently, it is the data is loaded into the base station and a link is provided to the data for succeeding processes which are going to operate on the data.

Precondition: Choice of data to be used is provided.

Postcondition: Data to be sent is available at the base station for preparation.

Action: The data 12 is loaded into the base station, e.g., in a manual process 122.1 trigger the event to load the data from the data centre to the base station by selecting the according meta data through a web browser.

As an example, an user logs on to the base station and authorises. An authorised user may now have in a prior step selected the name of the data to be loaded. In this step the choice of the authorised user is now to load the user data to the base station.

By having clicked on a "load" button in the web browser an event is triggered to load the data to the base station. This means if the data has been stored on a tape device the event retrieves the data from the tape device and stores it on the base station's memory. In other cases the data may be stored in the base station's permanent storage, e.g., database. The data can also be loaded automatically 122.2 to the base station.

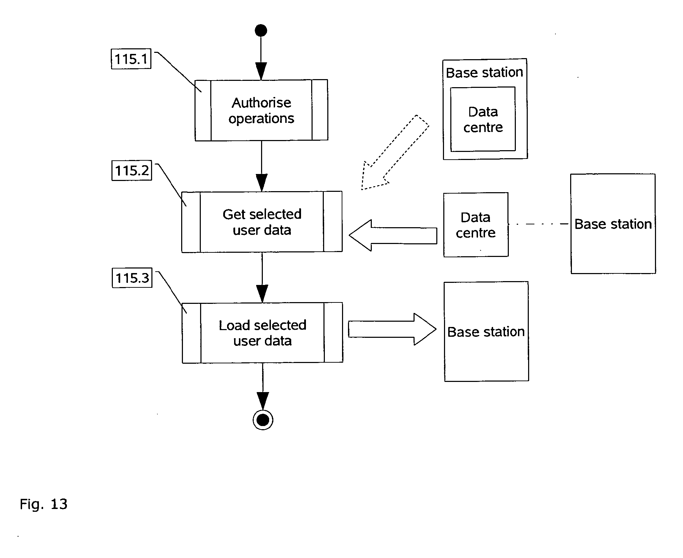

With reference to Fig. 13, a flow chart illustrating the steps of automatically feeding data into the base station is shown.

After the meta data has allowed the choice of the user data to be loaded to the base station, the data itself needs to be loaded to the base station. Thus succeeding operations can prepare the data to be send over multiple communication links 2.

Precondition: Choice which data to load has been made.

Postcondition: Data is loaded to the base station.

Action: Authorise the operations to make sure that the automatic operations do not inflict the security mechanisms. If desired the automatic operations can be authorised by default to make sure that the data are always loaded and are prepared.

As an example, a car manufacturer loads data to be transferred using SOA mechanisms. Subsequently, operations are triggered as soon as the data has been transferred completely to the data centre which is connected to the base station. Afterwards the operations find the data using the provided meta data and load the data. When loading the data the operations are authorised by getting a certificate from the manufacturer via the SOA interface.

According to a preferred embodiment of the present invention, the operations requests a certificate. With this certificate they are allowed to load the data to the base station. It is also possible that a token has been provided by the customer and is attached to the computer in the base station which runs the operations. Using the authentication information from the token the computer's operations can be authorised.

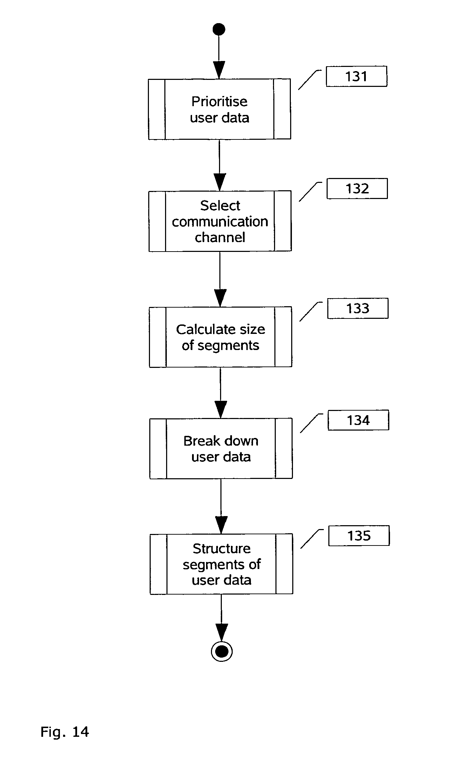

With reference to Fig. 14, a flow chart illustrating the steps of preparing data is shown.

When the data is available at the base station then the process steps as given in Fig. 14 can be run to prepare the data for further delivery. It is important to consider all security relevant steps at this stage as the data may only be meant for a special group of receivers from a special customer, e.g., a group of soldiers must be provided with some information about the enemies strength and this information is not meant to be delivered to anyone else. The advantage in preparing the user data is that after this step it is only possible to use the data when all data segments from the data are received and the possible encryption means are known to the receiver. The delivery of the data in form of data segments within the transmission units can be done over multiple communication links and this might prevent a man-in-the-middle-attack. In this step the data to be sent are prioritised 131 such that the most important data can be sent first. However, it is also possible that other criteria are used for the rules to determine which data to send first, e.g., cheapest communication links could be chosen over expensive communication links or data of smaller size are sent before data of larger size.

Precondition: Data to be sent is available on the base station for preparation.

Postcondition: Data is prepared for pushing the data into any employed protocol.

Action:
- Prioritise the data 131.
- Select communication links for transfer 132.
- Calculate size of the data segments in which the data must be broken down 133.
- Break down the data into data segments of the right size 134.

For example, to update coalition forces with the latest knowledge a special squad needs to provide the latest information in a fast, secure and reliable way. After having selected the data to be transferred and uploaded the data to the first communication device, the information needs to be prepared, i.e., the prioritisation chosen, the communication channels 2 to be used need to be defined. After these steps the size of the data segments can be calculated and the data is broken down into segments of same size. All segments are then stored in the right sequential order to make sure that the data is completely transferred to the target devices.

A sergeant may use a web page to set the priority of the data to be transferred. Then adequate communication channels 2 for transmission are chosen. With the knowledge of the payload size which are used over the communication channels the size of the segments can be determined. There are two protocols used with protocol using 1472 Bytes as payload and protocol B using 512 Bytes as payload. The the greatest common divisor is 64 Bytes. This means that the user data is broken down into segments with the same size of 64 Bytes. The segments are stored in a tree structure which allows to identify all segments to be sent over the communication channels.

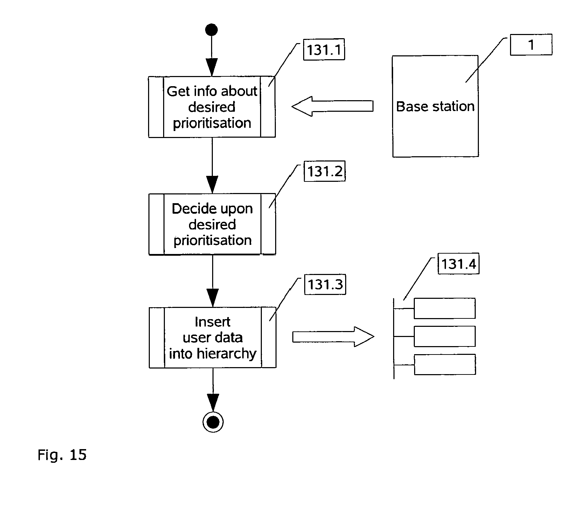

As to Fig. 15, a flow chart depicting the steps of prioritizing data 131 is shown.

The prioritisation 131 of the data is one of the most important steps within the method to transfer data over multiple communication links. The priority can be set manually or automatically, based on a rule set which describes the criteria in detail. The rule set can be subject to change and is adjustable for any case. Criteria for the decision within the rule set may be, e.g., cost, speed, bandwidth, expected image detriment. The priority is determined and the data linked to the priority within a special structure, e.g., a round robin hierarchical queue 131.4. This is a combination of several queues (e.g. first-in-first-out queue) where each queue represents a distinct level in the hierarchy. Each of the hierarchical levels are queried in a round robin process which means that for each queue the first element is queried, then the second element etc. If all elements data) have been processed for one level then the next lower level is to be processed the same way.

Exception is that processes from the highest level within the hierarchy always have precedence over other processes and may even disrupt running transactions. Processes from higher level also have precedence over processes from a lower level.

However, the prioritisation can also be done with other similar structures which allow for representation of different levels of hierarchy and allow for the presence of multiple entries for each hierarchy level, e.g., a B-tree can be used with the most important data stored in the first level of nodes, the second most important data stored within the second level of nodes, etc. Important is that data from the highest level is to be sent as soon as possible (e.g. when the communication link is available). If there are no data within the first level, the next level is processed (e.g. data from the second level). If no data are available in the second level, then the third level is processed, etc. Whenever high priority data are entered in the highest level then running operations from lower levels can be interrupted and the most important data from the highest level are processed.

Precondition: Meta data of the employed communication links is available.

Postcondition: Meta data of the employed communication links is available.

Action: Either automatically or manually 132 choose the priority for the data to be transferred.

The priority may be manually provided if, e.g., accessing the meta data of the data through a web browser and providing or changing the attribute for the priority of the meta data. Or the priority can be automatically set by providing this information within the meta data of the data. The data and/or a link to the data and/or the meta data of the data is put into a hierarchical queue at the base station. The hierarchical queue is made up of several levels which describe the priority of the sending, e.g., the highest level can mean "send as soon as possible", the second level can mean "send with high priority". Within one priority level all data to be sent can have the same urgency, i.e., later added data will be operated before any of the data from a lower level but after other data from the same level.

For example, a car manufacturer needs to update the automatic car brake systems (ABS) because an implementation flaw does not deal with two different street conditions at the same time. A re-call of the affected cars would have very serious impact on the company's image. Therefore the car brake system needs to be updated without the need to get all cars into a service areas. Updates of the car brake system need to be done as soon as possible because their functionality is vital for the car and its occupants. The car manufacturer provides data about the prioritisation within the meta data of the user data. This information is used to prioritise the preparation and sending of the user data.

In order to prioritise the data a number between 0 and 1000 is given to the data to be transferred. The higher the value, the higher is the prioritisation of the data. The prioritised data is put in a hierarchical queue at the base station where it waits to be processed. In the queue there are four stages which define the priority of the data. Within one level the data is processed in a FIFO mode (first-in-first-out) which means the first data which is put into a certain level will be processed before any of the other data within the same level. It is also possible to have the data split into several levels where data with a prioritisation of 0 to 200 is in the lowest level, data with a prioritisation of 201-400 in the next level, data with a prioritisation of 401-600 in the third level, data with a prioritisation of 601-800 in the second highest level and data with a prioritisation of 801-1000 go into the highest level. Within the same level a round robin process finds out which data have the highest prioritisation, e.g., when data with values of 850, 950 and 870 are in the highest level, then the data with prioritisation of 950 are processed first, then data with prioritisation of 870 and finally data with prioritisation of 850.

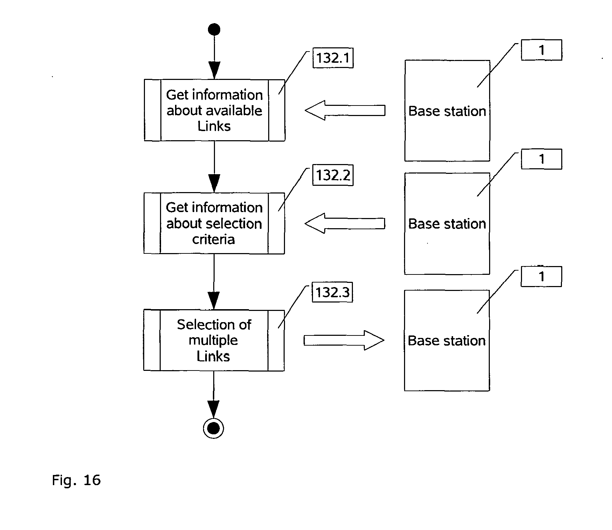

As to Fig. 16, a flow chart illustrating the steps of selecting communication links is shown.

When trying to send the data to the receiver it is necessary to decide which links to use for sending the data. The decision is based upon rules which can be changed for any specific case, e.g., for one case the most reliable communication links shall be used whereas another case may require the use of the fastest or cheapest link. In most cases this decision will be made automatically using meta data of the communication links to use, e.g., a text file or a binary file which describes the rules. In other cases the decision can be made manually, e.g., by selecting the links to be used from a web site which is provided by the base station.

Precondition: Meta data of the employed communication links is available.

Postcondition: Choice of communication links to be used has been made.

Action: Either manually or automatically choose 132.3 the communication links to be used.

The communication links are chosen by meta information which needs to be accessed 132.1, 132.2, e.g., their used protocols, their name, the ports, the connection speed, their reliability, the cost which are needed to use a special communication link. The information of the communication links and their inherent protocols is used to calculate the size of the data segments by using the payload size information of the protocols to be used. This choice is temporarily stored on the base station and is logged permanently in a later step.

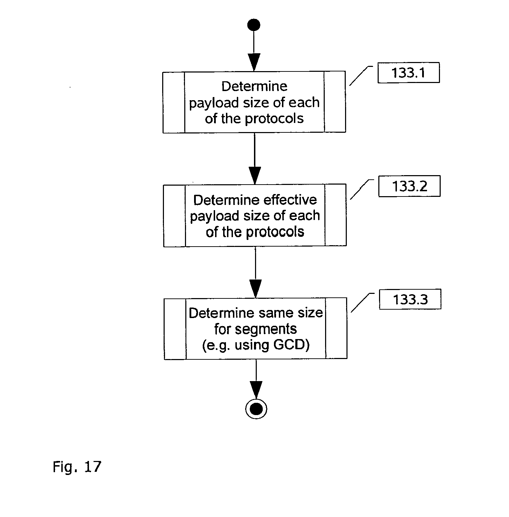

Fig. 17, shows a flow chart illustrating the steps needed for calculating a segment size.

Preferably, data is broken down into data segments. The data is delivered to the base station and as it needs to be available across multiple links, the easiest way is to split the data into data segments of the same size which can be combined to a payload for each employed protocol. The data segments may have the same size as the processes of splitting and reassembling can be done very easily this way. All data segments may be then sent over multiple links and no matter over which link they are received, the data segments are created in such a way that they can be put together again in the correct order to form the originally sent user data.

Precondition: Choice of communication links to be used has been made.

Postcondition: Data is ready to be broken down into data segments.

Action:
- Determine the payload size of each of the protocols which are used on the chosen communication links 133.1.
- Determine effective payload size for each of the protocols 133.2.
- Determine the size of the data segments in which the data has to be broken down 133.3.

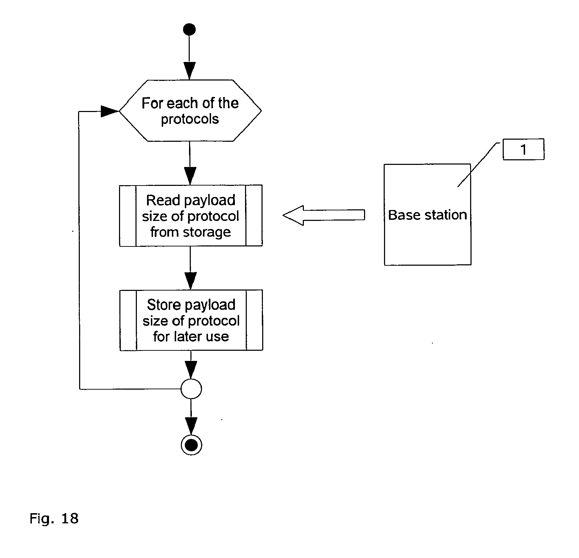

With reference to Fig. 18, a flow chart depicting the steps of determining the payload size of transmission units used by the respective communication links, is shown.

Sending the data over multiple communication links implies the use of multiple protocols.

Each protocol has its own payload size which needs to be considered for creating and combining the data segments as well as for sending the combined data segments over each protocol. The payload size of each protocol employed is known and this information only needs to be used for determining the payload size of each protocol.

Precondition: Choice of communication links to be used has been made.

Postcondition: Payload size of each of the protocols is determined.

Action: The payload size of each protocol can be determined by, e.g., retrieving this information from a data store by looking up the protocol and receiving back the information about its payload size.

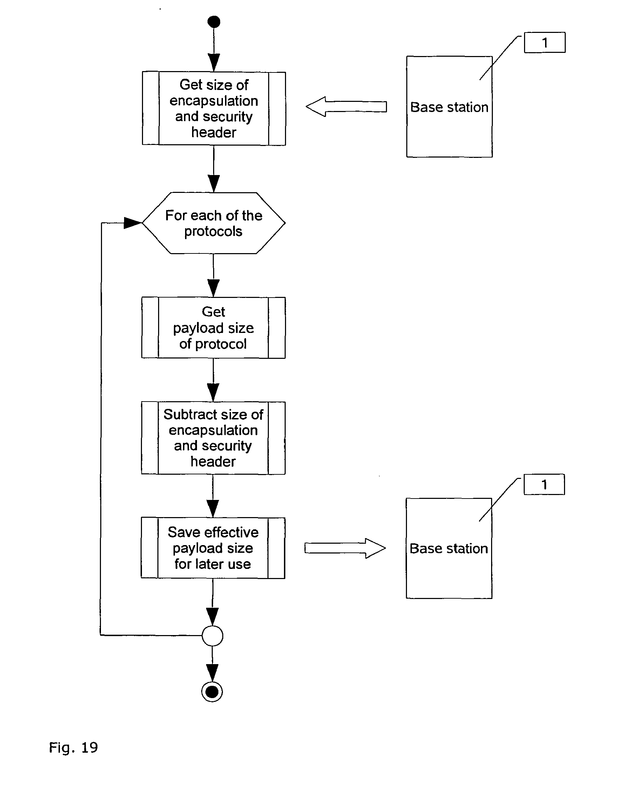

With reference to Fig. 19, a flow chart illustrating the steps of determining the effective payload size of the transmission unit used by the respective communication links is shown.

When the use-able payload size for each protocol has been determined the next step is to find out which part of the payload size can be used effectively to transport the combined data segments of the data. Therefore the size of the encapsulation and security header, which is sent together with the combined data segments, needs to be subtracted from the payload size of the protocols employed.

Precondition: Protocols to be used and payload size of each of the protocols is determined.

Postcondition: Effective payload size for each of the used protocols is determined.

Action: For each of the used protocols subtract the size of the header (i.e. encapsulation and security header) from the payload size of the protocol. The result is the effective payload size which can be used to transfer data segments of the user data.

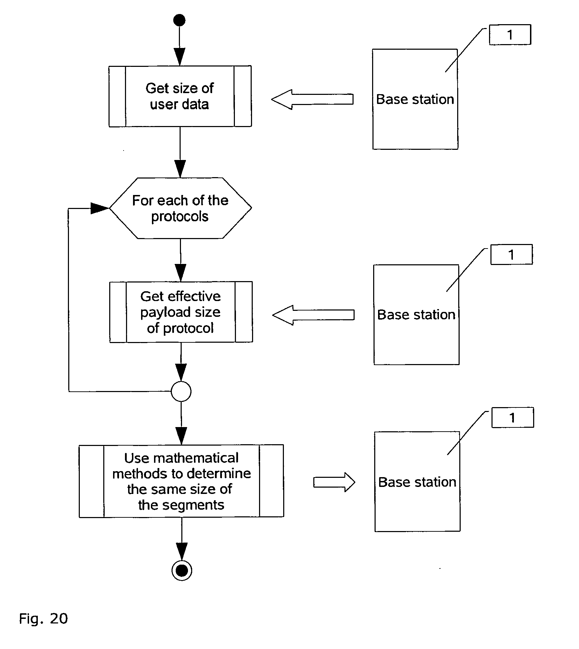

With reference to Fig. 20, a flow chart depicting the steps of determining the common segment size for all protocols is shown.

As the payload of multiple protocols usually is different from each other it is necessary to calculate which size for the data segments to be used, as an example the greatest common divisor of the effective payloads of the employed protocols can be employed to determine the common segment size to be used. This allows the efficient use of all protocols in such a way that the available payload is completely used to transfer the data.

Precondition: Choice of communication links to be used has been made and effective payload size for each of the used protocols is determined.

Postcondition: Data is ready to be broken down into data segments.

Action: Determining the data segment size, e.g., by determining the greatest common divisor (GCD),. Other methods which allow to calculate a common size for the data segments to be used are possible, e.g., data segments with a fixed size of 64 kBytes can be used to simplify the calculation of the segment size.

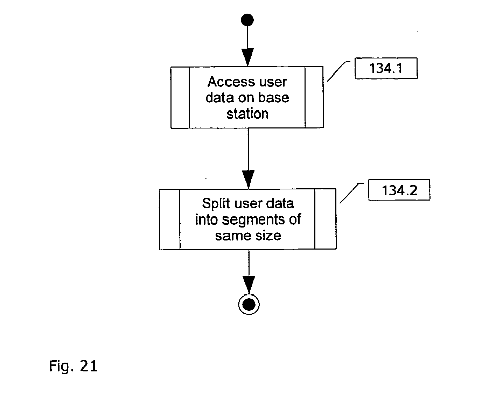

As shown in Fig. 21, a flow chart illustrating the steps of breaking down of the data is depicted.

After all steps have been processed to determine the size of the data segments in which the data is to be broken, the data can then be split into small data segments of the same size.

Precondition: Data is ready to be broken down into data segments.

Postcondition: Data is broken down into data segments.

Action:
- Access data 134.1.
- Split data into data segments of same size, e.g., Using the greatest common divisor 134.2.

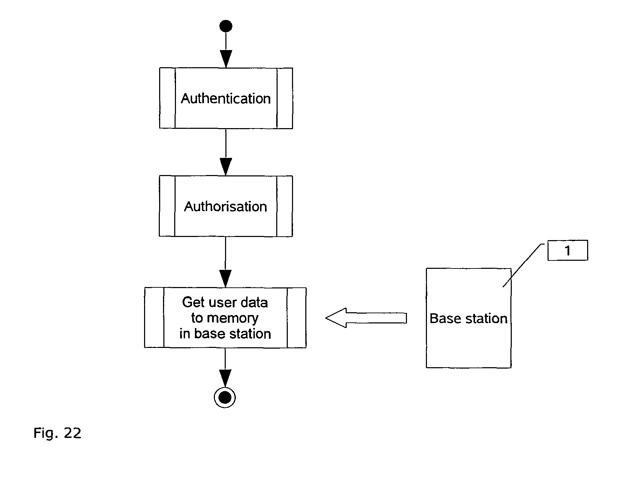

With reference to Fig. 22, a flow chart illustrating the steps of accessing data at the base station is shown.

In order to perform operations on the data it needs to be accessed. The kind of access depends on the location where the data is situated at the base station. If the data is stored in a data base it needs to be retrieved from the data base with, e.g., SQL commands.

Precondition: Data is ready to be broken down into data segments.

Postcondition: Access to data is granted.

Action: The data 12 which is to be transferred will be made accessible to the base station 1 by, e.g., loading the data from a data base into memory and providing a link to the in-memory available data. Loading the data can be performed by, e.g., running a SQL command on a data base which contains the data and load the data in a result set in the volatile memory of the base station. If necessary any security related information to authorise the access have to be provided. Means to provide security related information are, e.g., using certificates to validate the access. It is also vital to ensure that no concurrent writes on the in-memory data are possible to avoid data loss.

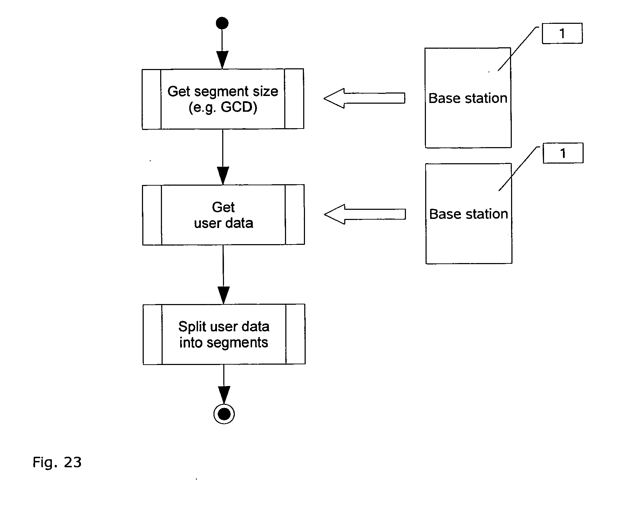

With reference to Fig. 23, a flow chart depicting the steps of splitting the data into data segments having the determined size is shown.

As the size of the data segments in which the data has to be broken down is known, the process to split the data can now be started. The process to split the data may use state of the art methods like using commands from the used operating system. The data is split into data segments of the same size, e.g., data segments have the size of the greatest common divisor.

Precondition: Data is ready to be broken down into data segments, access to data is granted and effective payload size is determined.

Postcondition: Data is broken down into data segments.

Action: The data is accessed at the base station 1 and using appropriate methods, broken down into data segments of the right size. The data can, e.g., be available in the memory of the base station. Using state of the art methods the data can be broken down into data segments of same size, e.g., size of the greatest common divisor (GCD), e.g., on UNIX the command "head -c <GCD> <data>" would retrieve a segment of size of <GCD> bytes from the <data>. Also operations directly on the hardware, e.g., manipulating registers of a CPU are possible.

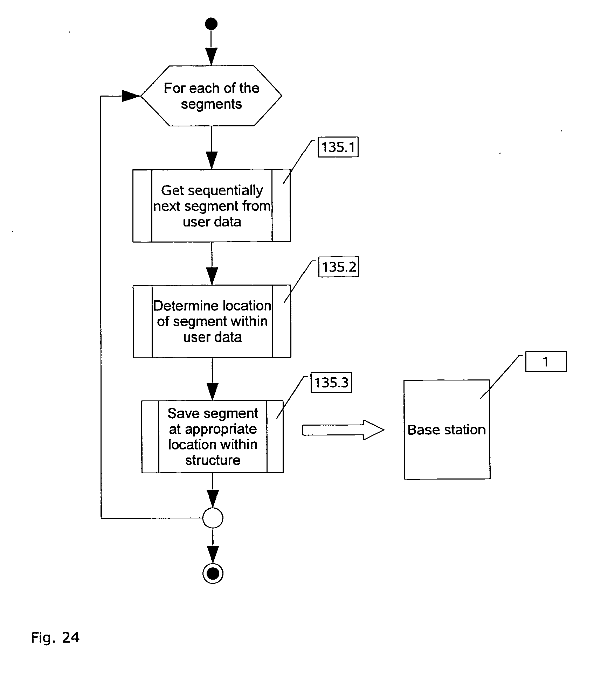

As to Fig. 24, a flow chart illustrating the steps of structuring the data segments is shown.

As the data segments of the data are transferred over multiple protocols and the header needs the information which of the data segments from the data is transferred, the data segments are taken from a structure which allows to determine which of the parts from the data is represented by each segment.

Precondition: Data is broken down into data segments.

Postcondition: Data is prepared for pushing to any employed protocol.

Action: The data segments from the broken down data are arranged in a structure which allows to determine which part of the data is represented by each segment, e.g., all data segments are taken sequentially 135.1 and stored in the leaves of an in-memory Bayer-tree such that each leaf of the Bayer-tree contains exactly one segment in such a way that the number of the leaf corresponds with the location of the segment within the data. The advantage here is that the data segments are accessible in random order and the desired data segments are accessible in a fast and efficient way. Or the data segments from the data are pushed into a first-in-first-out (FIFO) queue, the advantage here is that the administration overhead within the memory is minimalistic. To accomplish the build of the structure, all data segments are processed sequentially 135.1, their target location within the structure is determined 135.2 and the data segments are then saved at the appropriate location 135.3 within the structure.

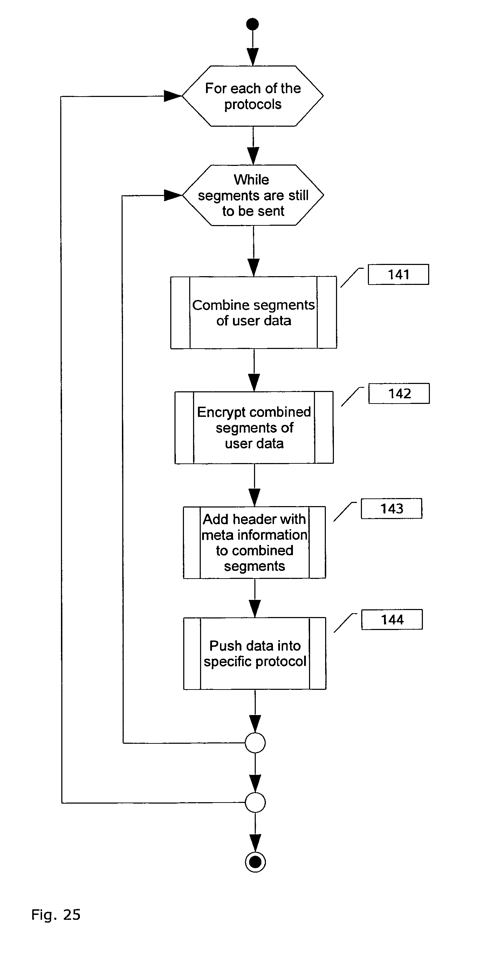

With Reference to Fig. 25, a flow chart illustrating the steps of forwarding the pre-processed data to be transmitted via the respective communication links, is shown.

After the data has been split into data segments of the same size, all data segments are combined and then sent over multiple links to the second communication device either at the same time or sequentially.

Precondition: Data is prepared for being pushed into any employed protocol.

Postcondition: Data is transferred over the employed protocols.

Action:
- Combine data segments 141.
- Encrypt combined data segments (optional) 142.
- Add header with meta information 143.
- Push the data into specific protocol 144.

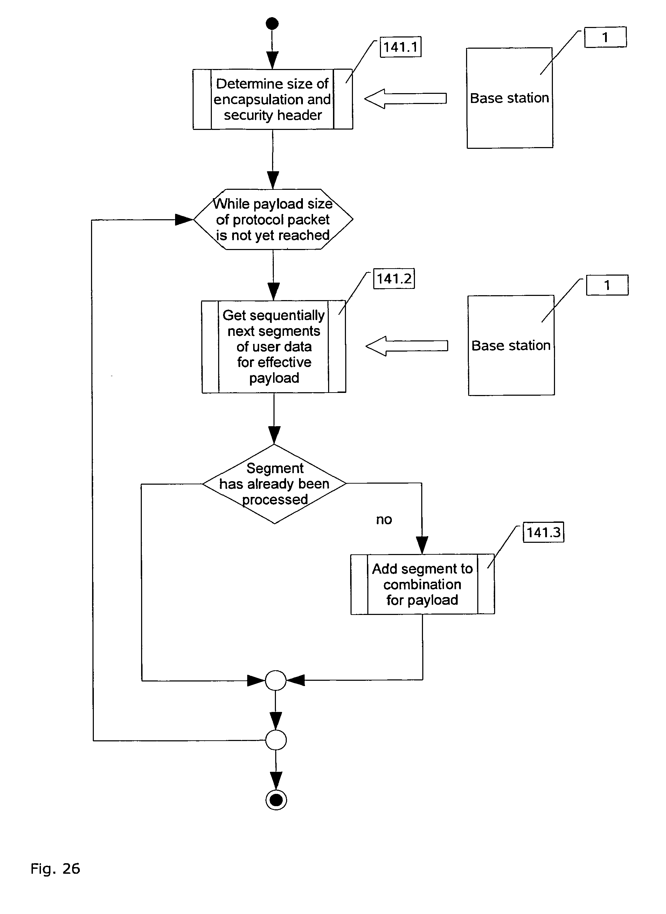

With reference to Fig. 26, a flow chart illustrating the steps of combining data segments is shown.

All data segments which result from the splitting 134.2 of the data 12, are now combined in such a way that the combination of data segments plus the according header fit into the payload of the protocol employed. This step is repeated for each employed protocol. As an example, the data segments 1 to 5 may fit into the payload of protocol A whereas data segments 1 to 3 fit into the payload of protocol B.

Precondition: Data is prepared for being pushed into any employed protocol.

Postcondition: Data segments are combined for the payload of each protocol employed.

Action: For each of the selected protocols retrieve data segments from the prepared data and combine them in such a way that the amount of chosen data segments 141.2, 141,3 and the size of the according header 141.1 fit exactly into the payload of one packet of the chosen protocol, e.g., for protocol TCP the encapsulation header with size of 84 bytes plus 5 data segments the size of 282 bytes each can be combined to fit into one data packet (the size of the payload is determined by the MTU and/or MSS of the protocol and delimited to 1500 bytes on the Internet because of Ethernet limit). MTU (maximum transmission unit) is the largest size packet or frame, specified in octets (eight-bit bytes), that can be sent in a packet- or frame- based network such as the Internet. MSS (maximum segment size) is the largest amount of data, specified in bytes, that a computer or communications device can handle in a single, un-fragmented piece.

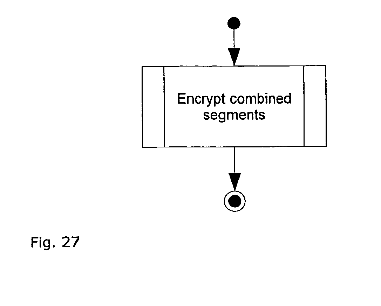

As to Fig. 27, a flow chart depicting the steps of encrypting the combined data segments is shown.

To allow for the security of data, the combined data segments are encrypted. The encryption is done either over the combined data segments or over each single segment within the payload.

The advantage is that no unauthorised access to the data is possible once they have left the base station.

Precondition: Data segments are combined for the payload of each protocol employed.

Postcondition: Data segments are combined for the payload of each protocol employed and encrypted.

Action: The combined data segments of the data which are meant to be transferred as one unit by the employed protocol are encrypted using state of the art technology, e.g., the combined data segments are encrypted with a common private key of multiple receivers. The certificates of all receivers are checked before encryption. If one of the certificates is member of a CRL (certification revocation list), the certificate will not be used and the receiver accordingly cannot decrypt the payload. The advantage is that the certificates of stolen receivers can be easily validated and the data is not endangered by unintended transmission.

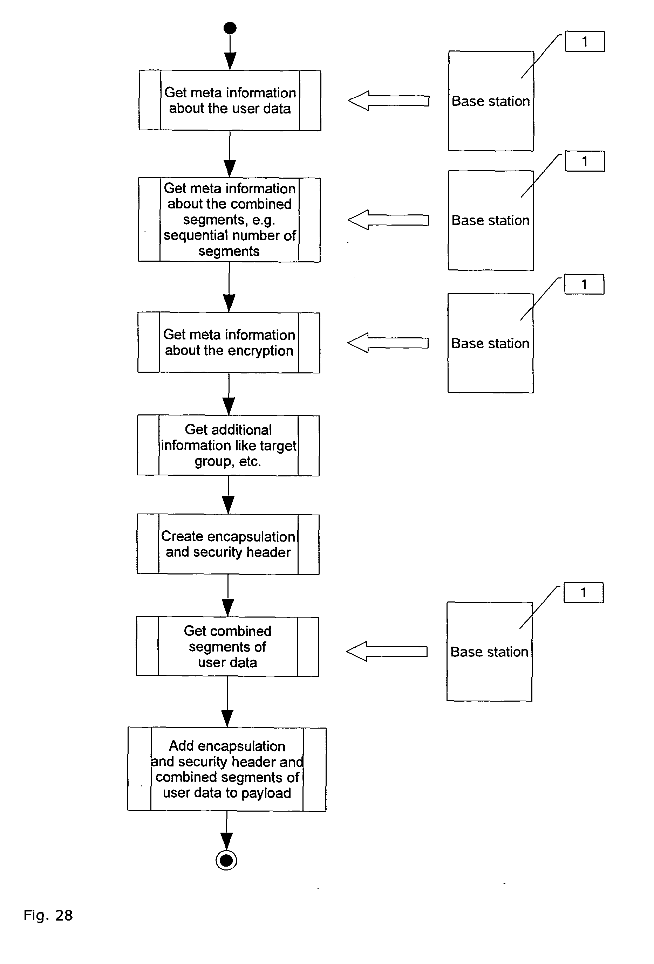

With reference to Fig. 28, a flow chart illustrating the steps of adding a header to the payload is shown.

For each packet of the employed protocol an encryption and security header needs to be added to the combined data segments. This header allows the receiver (i.e. the second communication device) to decide over further steps, e.g., the receiver might decide upon dropping not needed packets. The advantage is that the receiver does not need to know the data itself to take decisions, as all relevant information is provided within the header.

Precondition: Data segments are combined for the payload of each protocol employed.

Postcondition: Data segments and encapsulation and security header are combined for the payload of each protocol employed.

Action: Based on the meta data of the data and the identification of the combined, and possibly encrypted, data segments of the data the encapsulation and security scheme 14 is created as a header within the payload, e.g., the header provides information that the payload of the TCP (or any other protocol) packet contains the data segments 1 to 5 of the data. It further contains the information that the data is meant to be delivered to a first group (A) of all receivers and is encrypted using the AES algorithm. The advantage here is that the receiver immediately can decide to drop all packets which are not meant for itself, as it might not be able to decrypt the payload. Furthermore, the advantage is that the receiver can determine whether the payload contains any missing packets or the receiver is able to drop the packets if all contained packets are already present on the receiver side.

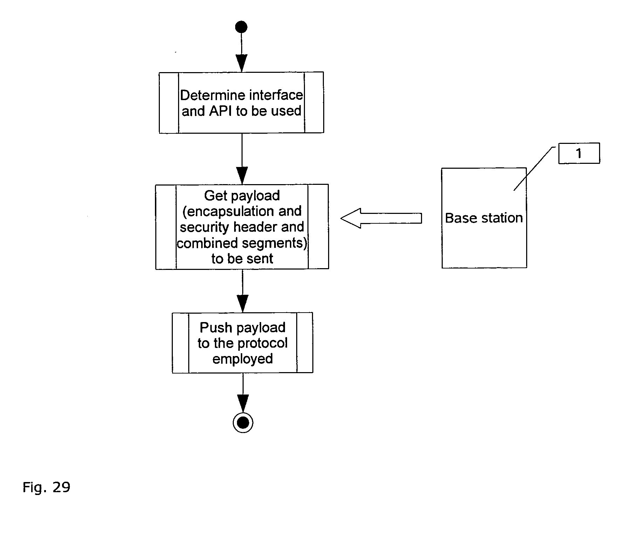

With reference to Fig. 29, a flow chart illustrating the steps of forwarding the prepared data to be transmitted via the respective communication links, is shown.

Once all steps to split and encrypt the data have been processed, the combined data segments and the added encapsulation and security header can be pushed to any of the employed protocols. This is done using the appropriate interfaces which are usually provided by the vendor of any sending device, e.g., network card.

Precondition: Data segments and encapsulation and security header are combined for the payload of each protocol employed.

Postcondition: Data is transferred over the employed protocols.

Action: Using designated interfaces the combination of data segments and header (i.e. the payload) is pushed to the communication links and the data is transferred, e.g., using APIs (application program interface) the payload may be pushed to an Ethernet interface where it is wrapped in a TCP packet and sent over the Internet.

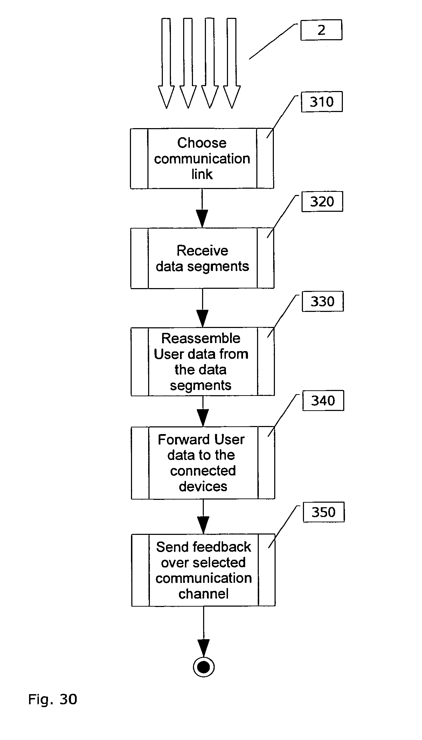

Fig. 30 shows a flow chart depicting the steps of receiving data.

According to a preferred embodiment, receiving the data in the form of data segments within transmission units is one of the main steps in the transfer method. The receiver can select multiple appropriate communication links over which the data segments are to be received and it also includes steps to prepare the completely received and integrity checked user data and forward it to the potentially mobile unit. The advantage here is that the receiver can switch between multiple communication links during reception of the data segments without having to re-transfer parts of the data segments which have already been received through another communication link used during the transfer of the data. Especially for remote operating objects in an area which does not guarantee that a single communication link is always available, it gives the opportunity to receive data over any reachable communication link and thus allows fast and reliable communication.

Precondition: Receiver is in a state which allows for receiving of the data segments.

Postcondition: User data has been forwarded to external devices.

Action:
- Choose communication link.
- Receive data segments either from multiple communication links or from a single communication link.
- Reassemble user data from the data segments.
- Forward user data to the connected device or devices.

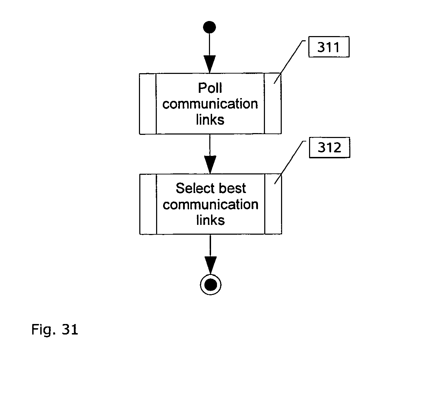

As to Fig. 31 a flow chart depicting the steps of choosing a communication link for reception is shown.

As soon as the receiver is in an operating state it is able to permanently find any available communication link or links and decide upon special criteria which communication link to use for the communication link. Multiple communication links can be chosen at the same time, thus providing fall-back mechanisms if the current selected communication link becomes unavailable.

Precondition: Receiver is in a state which allows receiving the segments.

Postcondition: Best communication link has been chosen for data segment reception.

Action:
- Poll communication links.
- Select best communication link (choice of best communication link is based on rules which define the selection criteria such as quality etc.).

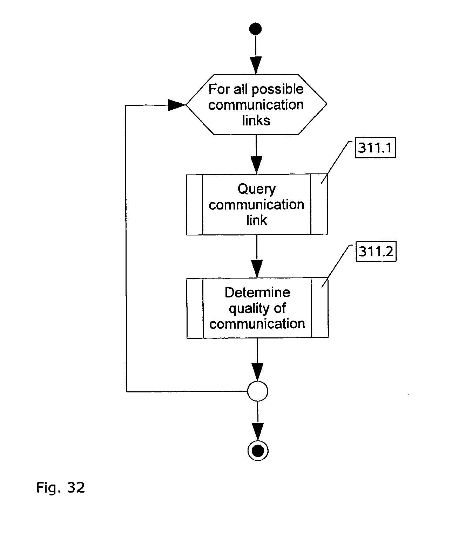

With reference to Fig. 32, a flow chart illustrating the steps of polling the communication links is shown.

To guarantee the connection the receiver must find available communication links and select the appropriate communication links to be used for the data segment reception.

Precondition: Receiver is in a state which allows for receiving the data segments.

Postcondition: Available communication links are known to the receiver.

Action: The receiver containing multiple interfaces is able to receive data from any standard communication link. A communication link is considered as available when a communication over this link can be established. As an example, if a query/answer test for a link is successful. Control of the Quality of Service (QoS) features is done accordingly for each other communication link used.

Preferably, the receiver containing multiple interfaces is able to receive data segments over satellite based communication, WiMax, UMTS, GPS, LAN, WiFi etc. The interfaces are antennas 3004 or comparable devices for wireless communication and sockets or other comparable means for non-wireless communication. Use state of the art technology to poll all communication links and determine the quality of the service (QoS), e.g., using a TCP/IP connection a ping command to the sender shows its availability. For satellite based communication this can be done in the service establishment (QoS negotiation) phase, for a better prediction of the service quality and resource needs, or in the service active (QoS maintenance) phase, for a prompt adaptation of the service quality and resources.

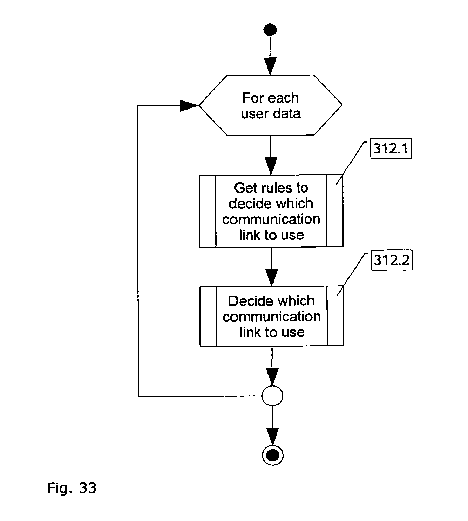

As to Fig. 33, a flow chart depicting the steps of selecting a communication link according to pre-defined characteristics is shown.

To guarantee the connection the receiver must find available communication links and select the appropriate links to be used for data segment reception.

Precondition: Available communication links are known to the receiver.

Postcondition: Best communication link has been chosen for data segment reception.

Action: Determine for each user data to be received which communication link is the best to be used. The decision which communication link is based upon a rule set which can vary from case to case, e.g., for mission critical user data the best communication link can be the communication link with the highest available bandwidth and the highest expected quality of service. For moving receivers in an inhospitable environment the criteria for the best communication link can be the communication link with the least expected interrupt time. As an example, satellite based communication links could cover best the communication to receivers in a vast desert. For other cases other criteria may be relevant accordingly. Multiple communication links can be chosen at the same time for reception of same user data.

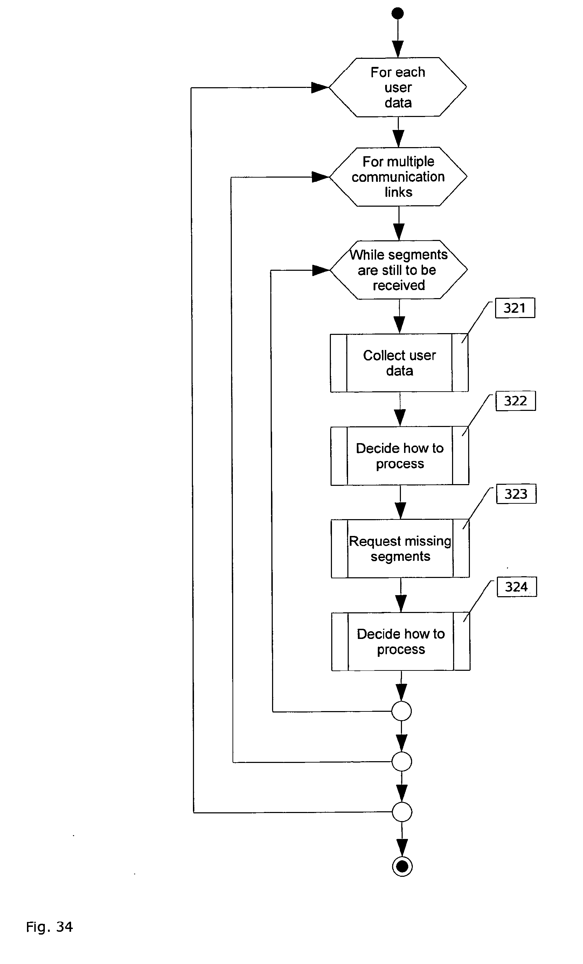

Fig. 34 shows a flow chart illustrating the steps of receiving data segments of a given user data.

Data 12 is received over multiple communication links and integrity checked, transmission units containing data segments which are not meant to be used on a special receiver are dropped, missing data segments are requested from the base station.

Precondition: Receiver is in a state which allows receiving the data segments and the best communication link or links has been chosen for data reception.

Postcondition: Data segments are completely received and integrity checked.

Action:
- Collect data segments.
- Decide how to process for each received transmission units.
- Request missing data segments.
- Decide how to process for each received transmission unit.

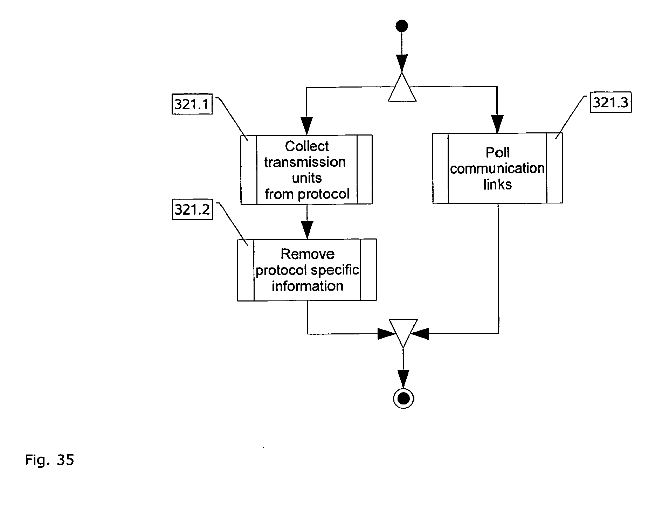

With reference to Fig. 35, a flow chart depicting the steps of collecting data is shown.

Data 12 is received over multiple communication links and integrity checked, transmission units containing data segments which are not meant to be used on a special receiver are dropped, missing data segments are requested from the base station.

Precondition: Receiver is in a state which allows receiving the data and best communication link has been chosen for data reception.

Postcondition: Data segments within the transmission units are received.

Action: For all communication links to be used, the data segments are received using the appropriate interfaces. Multiple communication links can be used at the same time. While collecting the data segments of the data the receiver continuously polls the communication links to find out whether the links are still available. When transmission units are received over the communication links the receiver removes any protocol specific wrappings of the transport protocols and prepares to access the meta (payload) data within the encapsulation and security scheme.

The payload consists of the encapsulation and security header and multiple combined, and possibly encrypted, data segments of the user data. This payload is made available on the receiver's side by, e.g., storing the payload in memory and providing a link to the storage address.

For example, satellite based communication are received using special antennas 3004, LAN based communication can be received over state of the art connection like Gigabit Ethernet, mobile telephone communication can be received over antennas using WAP protocol, etc.
When transmission units are received over the communication links the receiver removes any protocol specific wrappings of the transport. This means if, e.g., a communication has been established over TCP the NIC (network card) receives the data from the connected line, then removes any protocol specific wrappings (which are used to control the transport of the protocol) and presents the content of the payload from the received transmission unit.

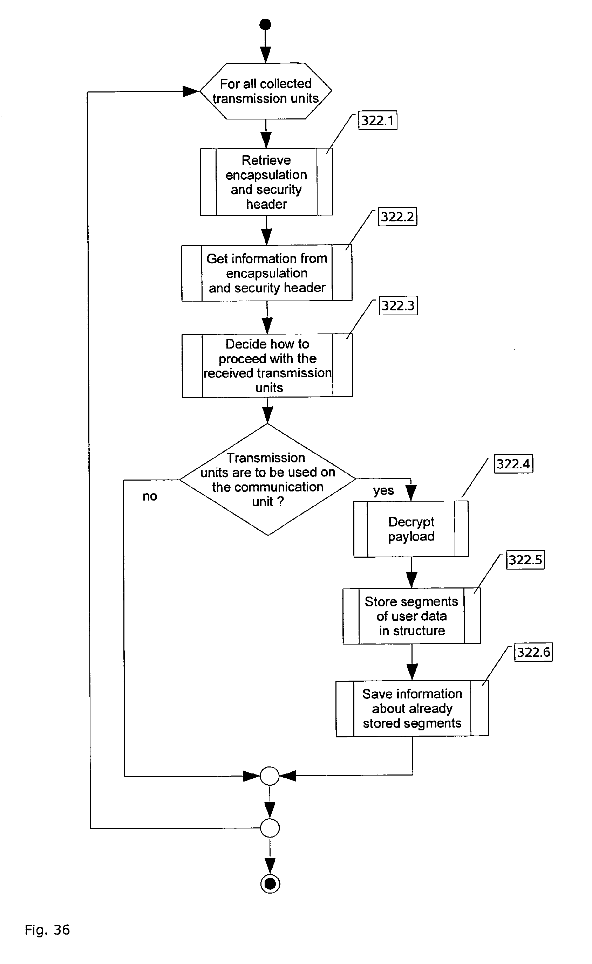

As to Fig. 36, a flow chart depicting the steps of determining the respective treatment for each received transmission unit are shown.

Data is received over multiple communication links and integrity checked, transmission units containing data segments which are not meant to be used on a special receiver are dropped, missing data segments are queried from the base station.

Precondition: Transmission units are received.

Postcondition: Data segments are saved in a structure.

Action: For each of the received transmission units the receiver can decide how to process with the packet, e.g., based upon the information which is provided in the encapsulation and security header the receiver may find out that the data is not meant to be received by that special receiver, so the receiver may decide to drop not needed transmission units. The receiver can also decide to only receive encrypted transmission units and drop all transmission units from an unencrypted communication link. The receiver may also decide to drop a complete transmission unit when all contained data segments of the user data are already present at the receiver. The receiver may also decide to accept a transmission unit because only some of the contained data segments of the data are still missing from previous communication cycle. With the decision to neither drop nor ignore the transmission units, combined and encrypted data segments of the data are decrypted. When all transmission units are received and decrypted, the data segments are stored structured on the receiver's side to easily reassemble the user data and to find out which data segments are still missing.

In a preferred embodiment, the data has been broken down into sequential the following sequentially data segments 1 to 5 where segment 1 represents the first part of the data and segment 5 represents the last part of the data. On the receiver's side the data segments are stored in the Bayer tree where segment 1 is stored in the left most leaf of the tree, representing the lowest value within the leaf numbers. Segment 2 is stored in the sibling leaf next to the first leaf, etc. If, e.g., segment four was missing then the leaf number 4 within the Bayer tree is empty and the receiver knows that segment 4 either has to be requested from the base station or received by a different communication link. Other data structure can be used instead of the Bayer tree, e.g., a queue may be used as well as a binary tree or a hash table or any other structure which allows storing the data segments in such a way that the data can be reassembled easily and the receiver knows which data segments are still missing.

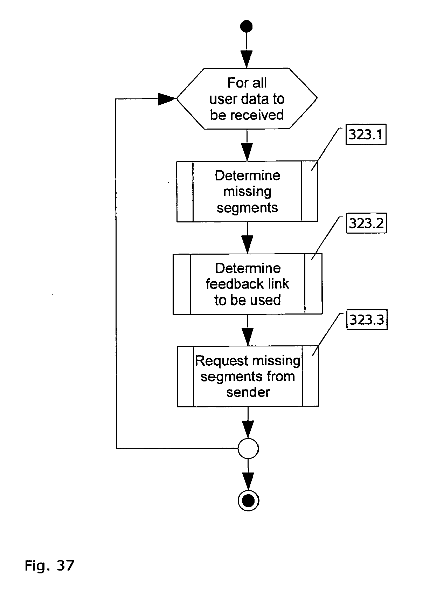

As to Fig. 37, a flow chart illustrating the steps of requesting missing data segments is shown.

Based upon the knowledge of already received data, the receiver knows which data segments are missing to reassemble the user data and can request the missing data segments from the base station. However, there may be cases where, e.g., multiple communication links have been used at the same time to receive data and no data segments are missing. If no data segments are missing, then this step may be obsolete.

Precondition: Receiver is in a state which allows receiving the data and the best communication link has been chosen for data reception and some of the data segments are already received.

Postcondition: All data segments are received.

Action: Based upon the knowledge from the previous steps the receiver knows which data segments of the data are still missing and can decide which data segments need to be requested from the base station. The decision can be made, e.g., because the transmitter stops sending more transmission units and the receiver knows that some transmission units are still missing. It is also possible that the receiver while polling the communication links finds out that the transmission has been interrupted because no communication is available. For each data which has been received the communication unit gathers information of missing transmission units in a hierarchical round robin process, i.e., every structure representing data is queried for missing data segments and these data segments are requested from the base station. Higher prioritised data are inspected before lower prioritised data. Data on the same hierarchical level are queried in a round robin process meaning that as long as there are data on the highest level, all data on the highest level are processed one after the other. If no more data are on the highest level, then the next lower level is processed, unless higher prioritised data arrives.

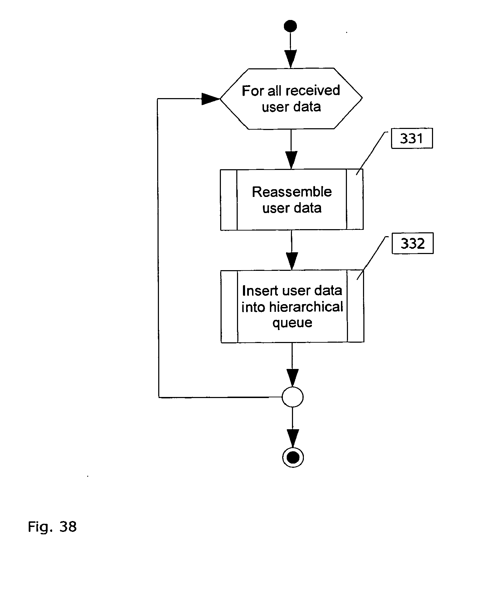

With reference to Fig. 38, a flow chart illustrating the steps of preparing data for subsequent use is shown.

Data is received over multiple communication links and integrity checked, transmission units which are not meant to be used on a special receiver are dropped, missing data segments are requested from the base station.

Precondition: Data segments are completely received and integrity checked.

Postcondition: User data is reassembled and available for further use.

Action:
- Reassemble user data.
- Insert user data into hierarchical queue (optional).

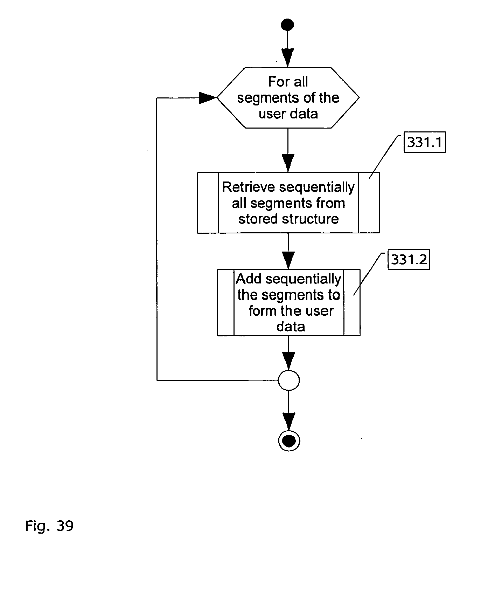

As to Fig. 39, a flow chart depicting the steps of reassembling the received data segments into user data is shown.

Data is received over multiple communication links and integrity checked, transmission units which are not meant to be used on a special receiver are dropped, missing data segments are requested from the base station.

Precondition: Data segments are completely received and integrity checked.

Postcondition: User data is reassembled and available for further use.

Action: The completely received and integrity checked data segments are used to reassemble the user data by the receiver. The receiver retrieves the structured data segments of the data from the data structure which has been used in previous steps to store the data segments on the receiver's side. All data segments are retrieved in the right sequential order from the structure and using standard operations the user data is then recreated, e.g., on an UNIX platform, operating a command like "echo <next segment> >> data" could append all data segments in the right order to a file which at the end contains the complete data.

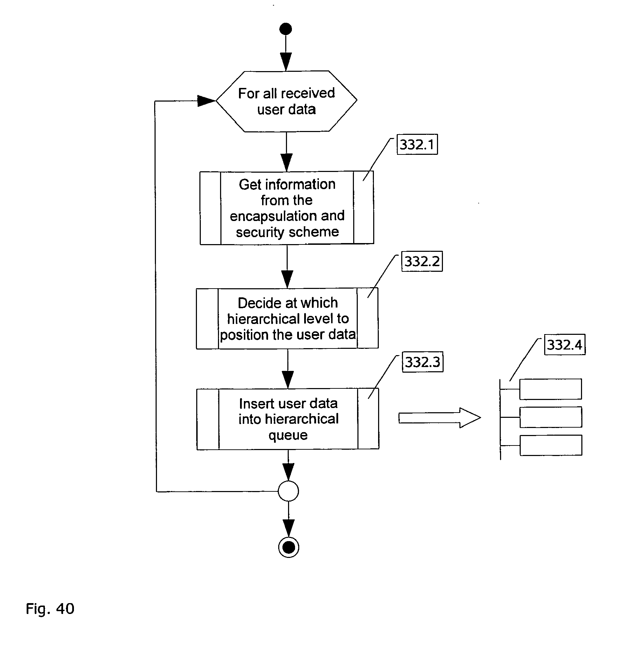

As to Fig. 40, a flow chart illustrating the steps of inserting data into a hierarchical queue is shown.

The received and reassembled user data are stored on the receiver's side. To allow for prioritising the data and/or a link to the data is put into a hierarchical queue. This hierarchical queue comprises of several queues which represent different hierarchical levels. Each of the queues is queried in a round robin way to process all data from one level. If no more data are in one of the levels the next lower level is processed. If data with higher priority arrive then the current processes are interrupted and the higher level data are processed in the meantime. If data arrive on the highest level, then all current operations can be interrupted immediately and the data from the highest level are processed.

Precondition: User data is reassembled and available for further use.

Postcondition: User data is prioritised and positioned within the hierarchical queue.

Action: Based upon the knowledge provided within the encapsulation and security scheme and/or based upon information within the data itself, the receiver decides to insert the data into a certain level in the receiver's hierarchical queue. The queue consists of multiple hierarchical levels which allow to contain multiple data or multiple links to multiple data at the same time. The hierarchical level represent the urgency of when to process the data at the receiver's side, e.g., all data within the highest hierarchical level can be meant to be processed immediately, all data within the next highest level can be meant to be processed as soon as possible, etc.

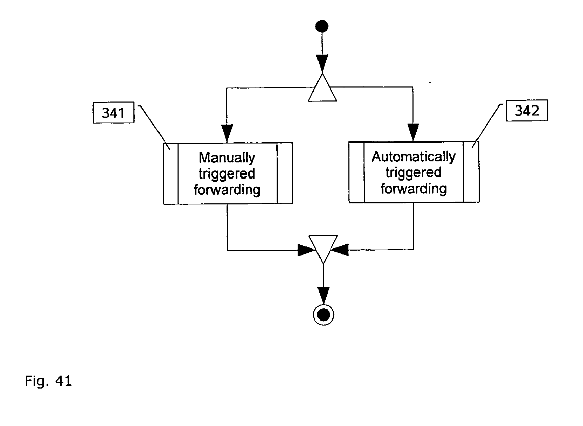

As to Fig. 41, a flow chart illustrating the steps of forwarding user data to the connected target devices is shown.

The completely received and integrity checked data 12 is forwarded to the devices in question. There are two kinds of processes, manually and automatically, to forward the data. The automatic process splits up into a service mode and a tunnel mode. Service mode, the default, means the communication unit is the endpoint of communication as seen from the base station. Any communication downstream beyond itself is initiated by itself according to its programming, embedded processes and commands and data received from the base station. It will then report back status of the asynchronously performed processes, if asked to do so. Tunnel mode however will set up a direct but virtual communication link between the base station and a device downstream of the communication unit. It is just the routing inside the communication unit for forwarding transmission units (after decryption) to a device on its local net and relaying answers back (encrypted) to the base station.

Precondition: Data is reassembled and available for further use.

Postcondition: Data has been forwarded to external devices.

Action:
- Manual process (optional).
- Automatic process (optional).

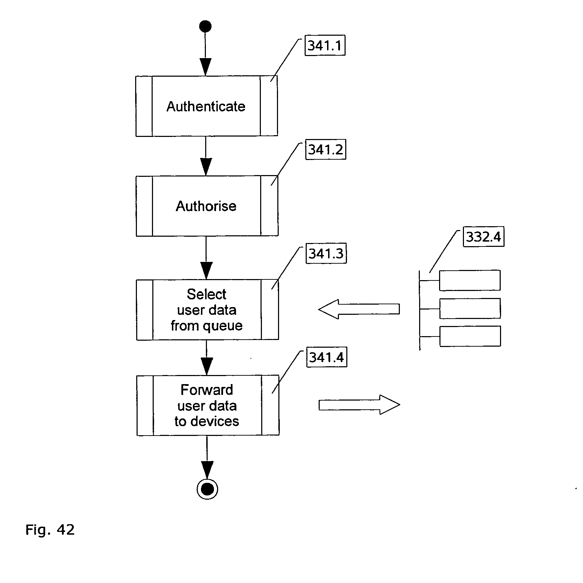

With reference to Fig. 42, a flow chart depicting the step-wise processing of data is shown.

Using meta information about the data within the hierarchical queue an authorised user may decide upon forwarding the data to a connected device.

Precondition: Data has been received and is prepared for further use.

Post condition: Data has been forwarded to external devices triggered manually.

Action:
- Authorise user.
- Select data to be forwarded.
- Forward data to one or more connected devices.

According to a preferred embodiment of the present invention, before a manual process can be run by a user, the user has to authenticate 341.1 (i.e. who is the user) and to authorise 341.2 (i.e. which rights does the user have). After these steps the user is then entitled to start a manual process to forward the data. The authorisation is optional.

Precondition: Data has been received and is prepared for further use.

Postcondition: User has been authorised.

Action: Using state of the art technology the user has to be authorised at the receiver in order to run any manual process. After the authorisation the right to do something has to discover.

For example, the user can be identified and authenticated by a smart card which is processed by a smart card reader attached to the receiver. The authorisation, i.e., the right to do something, can be done, e.g., by asking for the information from a connected meta directory or by membership of the user's certificate to a special group of persons like operators etc.

With the entitlement to run operations an authorised user can select data to be forwarded 341.3. Using meta information about the data within the hierarchical queue an authorised user may decide upon which data is to be forwarded to connected devices.

Precondition: Data has been received and is prepared for further use and/or user has been authorised.

Postcondition: Data has been selected to be forwarded to external devices.

Action: After optional authorisation the user may select the data to be forwarded to attached devices, e.g., using a serial console the authorised user can select the name of the data which has to be forwarded. The data and/or the link to the data provide access to the data to be pushed to the devices. Decision criteria for the choice of which data to forward can be, e.g., the urgency of the update process, affected devices, costs of (not) running the process, position of the process with the receiver's hierarchical queue, etc.

Next step within the method is to forward data to the connected devices 341.4.

Using the standard interfaces for communication available to the connected devices prepared command sequences (programmes) are issued involving the transfer of the received data to the embedded devices and performing a built in function with or to one or multiple of these devices.

Precondition: Data has been selected to be forwarded to external devices.

Postcondition: User data has been forwarded to external devices triggered manually.

Action: After selection of the user data to be pushed to the connected devices the start of operations are triggered manually if all needed conditions are met. For example a web site from within the car provides a button to start the forwarding process. When pushing the update button, the user data is then flushed to connected embedded devices. It is also possible that the operations are run by triggering the process via physical actions like pushing a button with the fingertips. Conditions which have to be met before the data is forwarded to the connected devices are e.g. state of the object, containing the receiver (i.e. if the operations require the object to be in parked and secured state this condition has to be met before the forward process can be started).

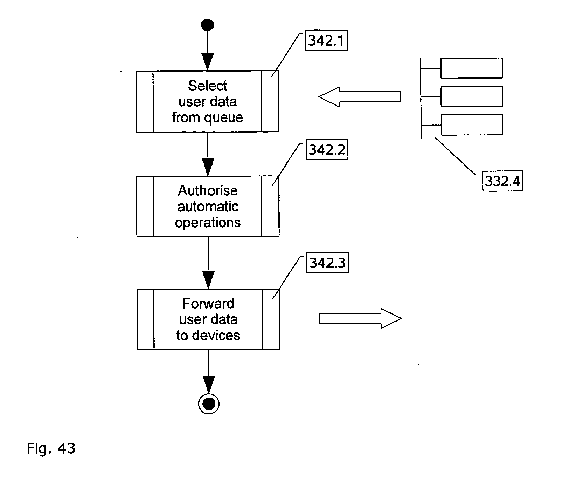

As to Fig. 43, there is shown a flow chart illustrating the steps of automatic processing.

Using meta information about the data within the hierarchical queue an automatic process may decide upon forwarding the data to a connected device.

Precondition: User data has been received and is prepared for further use.

Postcondition: User data has been forwarded to external devices triggered automatically.

Action:
- Authorise operations (342.2).
- Select data to be forwarded (342.1).
- Forward data to connected devices (342.3).

In an embodiment of the present invention, based upon special decision criteria an automatic decision is made which data has to be forwarded to the connected devices.

Precondition: User data has been received and is prepared for further use.

Postcondition: User data has been received and is prepared for further use.

Action: Based upon their position within the hierarchical queue at the communication unit 3 and/or the state of the object, containing the communication unit, the user data 12 is chosen to be forwarded to the connected devices, for example the update for the firmware of a car break system (ABS) may only be run when the car is parked and the user data 12 for the firmware is in the highest position within the hierarchical queue at the receiver within the car. Then the automatic process selects the firmware update as soon as the car is parked. The selection is prioritised over an firmware update for the in-car navigation system as the user data for this update are in a lower level in the hierarchical queue. When multiple user data are in the same level then the automatic process selects the data in a round robin process, i.e. the automatic process selects the first data within one level of the hierarchical queue. When a running process can be interrupted or is finished then the next user data within the same hierarchical level is chosen, etc. When all operations within one hierarchical level are completed then the processes from a lower level of the hierarchical queue are chosen. If user data arrives on a level of higher priority then the current operation may be interrupted, if possible, and the higher prioritised user data are chosen.

Before the operations can be started, the operations for the automatic forward process have to be authorised, e.g. only operations which are allowed for the receiver and the connected devices can be triggered automatically. Operations which are not allowed e.g. updating a firmware of devices from third-party vendors are not permitted.

Precondition: Data has been received and is prepared for further use:
Postcondition: Data has been selected to be forwarded to external devices.
Action: Based upon information from the user description data 110 which are provided for the user data 12 and/or information from within the user data, and/or information about the communication unit and/or the state of the object containing the communication unit, a process can decide which operations are permitted, e.g. a remote firmware upgrade of a black box within an air plane may be illegal and therefore not being permitted.

In the next step, using the standard interfaces for communication available to the connected devices prepared command sequences (programs) are issued involving the transfer of the received data to the embedded devices and performing a built in function with or to one or multiple of these devices.

Precondition: User data has been selected to be forwarded to external devices.

Postcondition: User data has been forwarded to external devices triggered automatically.

Action: After selection of the user data 12 to be pushed to the connected devices the start of operations are triggered automatically if all needed conditions are met. Conditions which have to be met before the data is forwarded to the connected devices are for example the state of the object, containing the communication unit (i.e. if the operations require the object to be in parked and secured state this condition have to be met before the forward process can be started).

Action: After selection of the data to be pushed to the connected devices the start of operations are triggered automatically if all needed conditions are met, e.g., updates are programmed to the memory of connected embedded devices. Conditions which have to be met before the data is forwarded to the connected devices are, e.g., state of the object containing the receiver (i.e. if the operations require the object to be in parked and secured state these conditions have to be met before the forward process can be started).

For example, the DGPS receiver of a container crane is updated to use new beacon frequencies and base station positions by uploading this data re-packaged as NMEA commands via a RS-232 interface from the described device to the DGPS receiver.

Preferably, the device has implemented physical connectors and protocol stacks to any number of standard or bespoke embedded interfaces. Standard interfaces include CAN, MOST, Flexray, Ethernet, ProfiBus, RS-232 and many others.

Received data are triggering a built-in service mode at the communication unit.

Service mode, the default, means the communication unit (receiver) is the endpoint of communication as seen from the base station. Any communication downstream beyond communication unit is initiated by itself according to its programming, embedded processes and commands and data received from the base station. The communication unit will then report back status of the asynchronously performed processes, if asked to do so.

Precondition: Data has been selected to be forwarded to external devices.

Postcondition: Data has been forwarded to external devices triggered automatically.

Action: The services for the service mode need to be predefined so that the communication unit knows that, e.g., a "command 123-#77-#C1-#0000 for device 7" means "download the next 77 packets of information (if they verify the checksum) to device "C1" at address "0000".

And as no other information is given the communication unit will just return success or failure at the next communication option after the flash attempt. A "return code: Force on-line" would have made it dial out to deliver that information over mobile communication from within the communication unit.

Received data are triggering a tunnel mode at the communication unit.

Tunnel mode however will set up a direct but virtual communication link between the base station and a device downstream the communication unit (receiver). It is purely the routing inside the communication unit for forwarding transmission units (after decryption) to a device on its local net and relaying answers back (encrypted) to the base station.

Precondition: Data has been selected to be forwarded to external devices.

Postcondition: Data has been forwarded to external devices triggered automatically.

Action: For example, the base station can communicate directly with an engine management device attached sharing a CAN Bus with a communication unit. In this mode the communication unit will just ensure the secrecy and integrity of the communication on the channel between itself and the base station and serve as a relay of putting on downstream what it has received from upstream and vice versa. It can be seen as an unattended- upgrade-or-repair-mode. This saves needing physical access to the car/boat/soldier etc. and thus saves lots of money and makes this concept future proof.

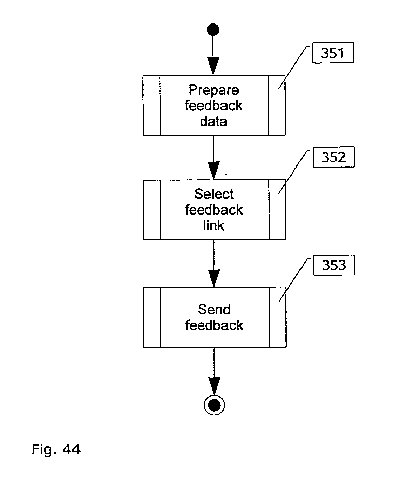

As to Fig. 44, a flow chart depicting the steps of sending feedback over pre-selected communication links is shown.

When the operations have been completed the communication unit can deliver feedback to show, e.g., the state of the operations (success, failure, pending, etc.) or deliver more detailed information, e.g., the state of the remote object can be determined by the feedback of the receiver.

Precondition: Data has been forwarded to external devices.

Postcondition: Feedback has been delivered to the sender (base station).

Action: The feedback data which is to be sent back to the receiver is prepared using return codes from the operation modes and/or additional information which can be either provided manually or automatically by, e.g., querying connected devices.

Prepare feedback data.

Choose feedback channel.

Send feedback data.

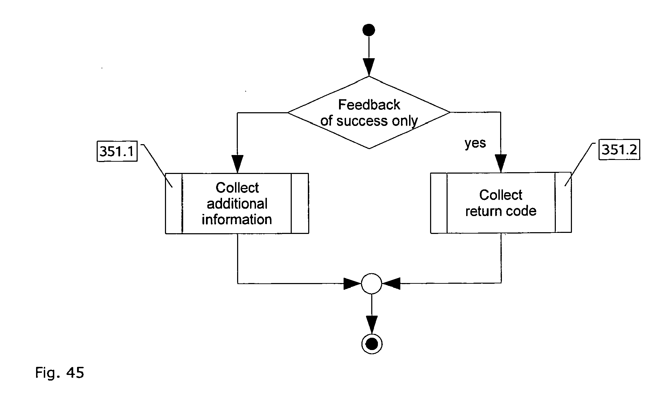

As to Fig. 45, a flow chart illustrating the steps of preparing feedback data is shown.

When the operations have been completed the communication unit can deliver feedback about, e.g., the state of the operations (success, failure, pending, etc.) or deliver more detailed information, e.g., the state of the remote object can be determined by the feedback of the receiver.

Precondition: Data has been forwarded to external devices.

Postcondition: Feedback data has been prepared to be delivered to the sender (base station).

Action: The feedback data which is to be sent back via the communication unit to base station is prepared using return codes from the operation modes and/or additional information which can be either provided manually or automatically by, e.g., querying connected devices.
- Prepare feedback data
- Choose feedback link
- Send feedback data

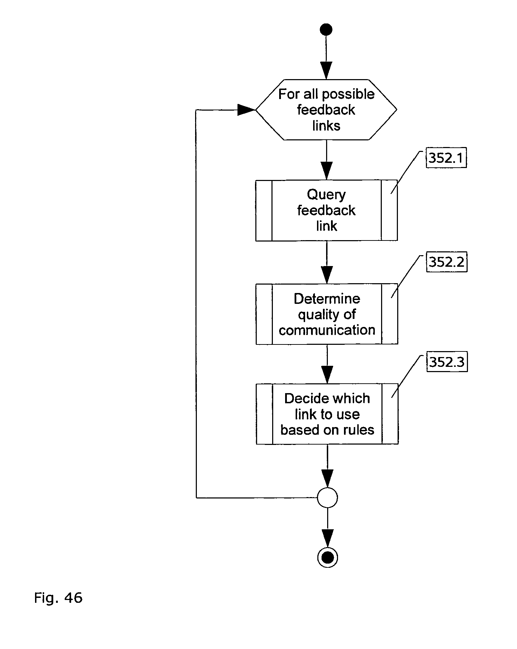

As to Fig. 46, a flow chart illustrating the steps of polling communication links used for transmitting feedback data is shown.

Based upon special rules, the receiver selects the communication link for feedback.

The rules may be based on general criteria as, e.g., availability of the communication link. The rules may also be based on special, customer specific rules, e.g., a customer may choose to use only selected satellite based communication because of reliability or he may choose to use GPRS because of related costs, or a rule might say that special links are not to be used because of restrictions by law.

Precondition: Feedback data has been prepared to be delivered to the sender (base station).

Postcondition: Communication link for feedback has been chosen.

Action: Similar to the polling for available communication links to receive data, the receiver device (communication unit), polls for available communication links to transmit feedback. Based on the result of the polling the feedback rules are used to select the appropriate link for feedback, e.g., from available channels like UMTS, GPRS, WiMax the communication unit may choose to use GPRS because it offers the right combination of availability and cost for the amount of feedback data to be sent.

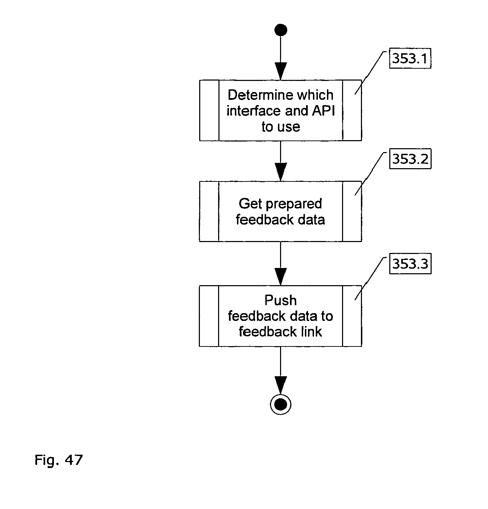

As to Fig. 47, a flow chart illustrating the steps of sending feedback data is shown.

Using the appropriate interfaces which are usually provided by the vendor of any sending device, e.g., network card the data is pushed over the link by accessing the device with its API.

Precondition: Communication link for feedback has been chosen.

Postcondition: Feedback has been delivered to the sender (base station) Action:

Action: Using designated interfaces the feedback data is pushed to the feedback channel and the data is transferred, e.g., using APls (application program interface). It is also possible that a feedback can be made through local communication links, e.g., a manual process has been started via a web interface which is provided by the communication unit, the feedback then is also presented to that web interface, giving the authorised person immediate feedback of completed processes.

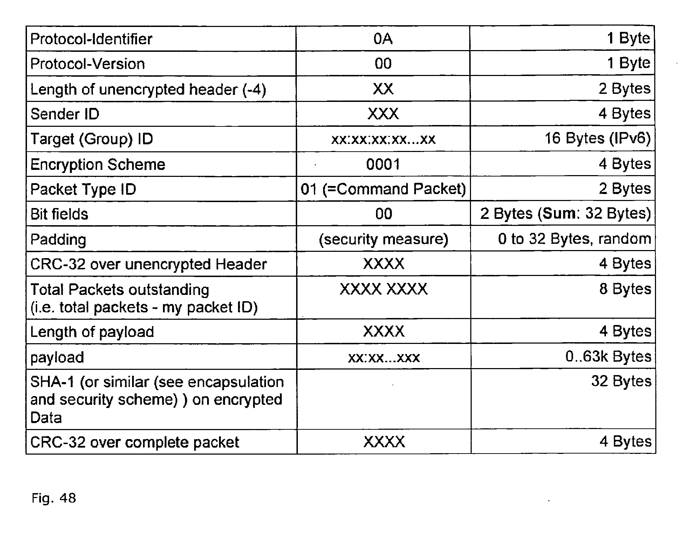

Fig. 48 shows the structure of the data encapsulation and security scheme.

In order to send the data via any protocol without losing context information, the data has to be broken down into the smallest usable data segments. At least one segment plus the according encapsulation and security scheme 14 have to fit into the protocol with the smallest reasonable segment size of unsegmented transportation as one unit. When the data has been sent to the communication unit 3, the encapsulation and security scheme is extracted from the protocol and inspected. With the knowledge provided within the encapsulation and security scheme the data can be reassembled on the communication units 3 side.

Technically speaking the encapsulation and security scheme is rather a header than a complete wrapper around the packages. Each of the used protocols (e.g. TCP, UMTS, XTP, .) must make sure that one packet (i.e. transmission unit) of the protocol is either transferred completely or regarded as missing. If the packets are transferred completely the communication unit 3 must decide whether the received packets are duplicate, based on the information which is provided by the base station 1 to allow for the communication unit 3 to reassemble the data 12. Duplicate packets are dropped immediately. This information can be specific for any case and for any client. Important is that the information about the data provides enough knowledge so the data can be identified unambiguously. The size of the encapsulation and security scheme is ideally the same as one of the packets, as this reduces complexity in calculating the amount of packets which can be transferred within one single packet of the employed protocol as one unit.

To be able to rebuild the data on the communication unit's side again the encapsulation and security scheme must provide the following information:
- Information about the hierarchical level on which the data has to be processed (usually a numeric value).
- Client which the data belongs to (globally unique, usually an alphanumeric identifier).
- Data which the data segments belong to (globally unique for each client, usually an alphanumeric identifier).
- Number of data segments in which the data has been broken into (at least one numeric value).
- Range of data segments which are contained in the packet (at least two numeric values split by separator).
- Security information.
- Check sum to validate the integrity of the user data (also needed to verify that on the communication unit 3 the data set has been restored successfully).

The encapsulation and security scheme 14 furthermore provides information about the hierarchical level in which the data is to be processed. When arriving at the communication unit 3 the encapsulation and security scheme is stored and linked to the hierarchical round robin process. The hierarchical round robin process acts as a special priority queue in which all data to be processed are stored so they are processed in the right order.

With the knowledge provided in the encapsulation and security scheme 14 the communication unit 3 can decide how to process the received data segments. If the communication unit 3 finds out that the data belongs to a different client, the data segments do not have to be saved on the unit. This is especially important if a large amount of data can arrive through simple broadcasting or in case a multicast is desired.

The identifier for the data allows the communication unit 3 to reassemble the data to their original state. To make sure that the data segments are used for the right data (if multiple data are processed at the same time) a globally unique identifier for the data is needed. Every encapsulation and security scheme 14 which contains data segments of the data provides this information within the header. While processing all temporarily stored encapsulation and security schemes the header information is inspected. When the transmission units belong to the data which is going to be reassembled they are processed and the data segments are put together. The needed data segments are extracted, not needed transmission units are discarded. If none of the data segments within a transmission unit are needed the transmission unit as a whole will be discarded.

The check sum in the encapsulation and security scheme allows the processes to verify the integrity of the data to be restored.

The following is a description of the layout for the encapsulation and security scheme.

The header is part of any transmission unit to be transferred, so it has to be small enough to keep all needed information without wasting space for the payload. First byte in the encapsulation and security scheme (protocol) is the identifier which allows for the base station 1 to prepare the payload for the protocol to be used. Next is the protocol version which gives the communication unit 3 the basis to decide whether the received data is usable. The used protocols are downward compatible, newer protocols will not be used as there is no guarantee that all used fields are present and unchanged.

Based on the information within the sender ID and the target (group) ID, client capability and grouping of communication units 3 are possible. As every communication unit 3 needs a globally unique identifier the target (group) ID must be able to address enough deployed communication units 3. It can be expected that millions of units are deployed at the same time and therefore the range for the addresses must be large enough, as an example, like in IPv6.

As a result, a minimum size of 84 Bytes + padding for the usable data packet is given. For command packets containing a command code and a device 31 ID, these may be in the hundreds of bytes typically. Data packets will use whatever the communication link 2 allows (typical are ~1.500 Bytes/TCP packet). This results in an overhead of roughly 6% for the administration purpose within the protocol related to the actual payload.

Hierarchical queue process at base station 1.

Data can be transmitted either continuously or in cycles. Depending on the amount of communication units 3 to be fed and depending on the urgency of cases a typical transmission cycle can be expected to span a whole day. The build up of a hierarchical queue depends on one or all of the following factors:
How many authorised users supply data for transmission on the given day to the communication unit 3 of interest.
The size or volume of the data (in bytes) to be sent.
The priority with which the data should be sent.
The total data volume (maximum data volume) which can be sent over a 24 hour period.

The data will be kept on being sent in a repetitive form until all communication units 3 which are active have confirmed receipt of the given data or a predefined time-out has occurred which allows the base station to find out that feedback from communication units is still missing. Then a process independent from the hierarchical queue will be activated to either inform the authorised user of the successful transmission and if certain communication units 3 did not respond at all or the base station will try to contact the individual units, that missed the initial transmission. Another time-out ensures that the individual communication attempts will end once the user-defined deadline is reached. If the individual communications are all successfully communicated to, the authorised user is immediately informed about the successful completion of the overall process. In the case of units finally still missing a valid communication the authorised user will be informed of the missing units and any condition the base station was able to derive.

Client usage scenarios.

The communication unit 3 acts as a information broker between the base station 1 that distributes information (using special processes) over multiple communication links 2 to a mobile unit 4 with various connected devices 31. This information is then distributed to the devices 31 and a feedback of the actual status is given to the communication unit 3 and transmitted back to the base station 1.

The client usage scenarios all (with minor alterations) have the same general process that is used to transfer data to and from the communication unit. The exact process and type of service are part of the business spectrum with its consulting and services divisions to support the correct use and build of the communication unit.

Automotive Manufacturer

### Example: Telematics

The increase of telematics services within the automotive sector are constantly increasing.

The areas that are presently widely known cover the following areas:
Automatic notification of emergency services (including calls to emergency services with actual car position)
Breakdown (automatic notification of repair services or brand dealerships)
Information services (parking, chemists, hotels, restaurants and cash terminals)
Mobile office (email and address management)
Intelligent traffic information
Internet connections to portals (weather, finance, flight and news information)

Each of the above services will require a infrastructure that can confirm that specific tasks or transactions have been fulfilled. In future a case requiring a change of a protocol may require a software update of the device 31, the Communication Unit 3 is then in a position to service the device 31 in question and relay successful completion.

### Example: Navigating

A car owner buys required data segments of a map while driving his car and navigating electronically. He initiates a purchase and a map data transfer brokered by the Communication Unit 3 will answer the successful financial transaction at the car manufacturers banking centre.

### OEM

A OEM can update his products in the field by issuing software updates via the Communication Unit 3 to any attached device 31 within his product. A known issue in a specific model can such be cured without physical access to the product and with minimal cost.

### Example: Telematics

In the telematics area this may be such companies as DPA, 11880, ViaMichelin, Apotheken.de, Mecomo AG, MagicMaps GmbH, Parkinfo.com, Infobolsa Deutschland GmbH and D&B.

### Truck fleet owners

Today, a large amount of trucks owned by fleet owners are used to transport a variety of goods from the production plant or storage house to the owner or buyer of the goods. To ensure a timely, efficient and cost effective delivery of the goods, the Communication Unit 3 can be employed to offer certain services to the fleet owners.

### Example: Fleet control and maintenance costs

Telematics data such as key engine telemetry, amount of km driven on a daily, weekly or monthly basis for each truck within the fleet. This data can be sent from each truck within the fleet to the Base Station 1. At the Base Station 1, this data can be then summarised and passed on to the fleet owners. This data can be used by the fleet owner to control his fleet as well as to optimise the maintenance costs of truck within the fleet.

### Example: Surveillance

Time tagged data of position (via navigation equipment) and speed to control the driving habit of the truck drivers. This type of information allows the fleet owners to have a better control of the drivers of the trucks within the fleet. The data can also be used to determine how many hours a driver of a truck is under way.

### Unit Rental

Companies can rent or lease units on very flexible terms of use.

### Example: Monitoring of usage

While low base fees allow for competitive pricing and great market acceptance, the availability of near-real-time unit usage monitoring allows for efficient invoice generation based on actual unit use, e.g., the hours of operation or the distance travelled. There is no need to collect information at the unit's location any more to ensure adequate use and proper cash flow.

### Example: Monitoring of physical conditions

The physical condition of the unit is monitored by the Communication Unit 3 and occasional physical service will include a module to verify that the Communication Unit 3 has not been tampered with and remotely available device 31 status is correctly mirroring it's physical condition.

### Example: Proactive service

Service can be conducted based on a usage history and extrapolation and is thus very price efficient compared to standard fixed-term scheduled services. Service is also more proactive as devices 31 status allows for knowing when a technical service needs to be conducted in the future and failure to service on time can lead to appropriate information to the unit owner and will not (as currently) stay within the realm of local knowledge.

### Example: Insurance

A insurance can monitor it's customer units according to the contract between it and it's customers. So technical conditions like physical location of units, their timely servicing or adequate use can be pro-actively monitored leading to low risk margins and very good rates for the insurance customers.

### Example: Stolen cars

A insurance company may have a vehicle reported as stolen and a claim is made from one of its clients. The Communication Unit 3 helps to locate the vehicle, render it unusable and inform the insurance company of its location.

### Example: Specialised tariffs

For specialised tariffs the insurance company may wish to monitor specific parameters of a Mobile Unit 4 such as speed, driving distance and geographic location. The Base Station 1 can monitor the Mobile Unit 4 through contact to the Communication Unit 3 and connected devices 31 and control units.

### AID organisation

An aid organization has normally the situation that single trucks or convoys are active in dangerous environments such as conflict or war areas. Depending on this situation the regular communication infrastructure such as mobile or public networks are working only temporary or are controlled by military forces.

### Example: Manage car transports

To control and manage care transports it is very important to communicate with this convoys over long distances and on real time to send information for changing the direction or the complete order. Based on the Communication Unit 3 and the different Communication links 2 (in most scenarios the satellite way) the Aid Organization is able to manage their convoys. Feedback from the convoys to the Aid Organisation could be received over mobile networks, satellite uplinks or on demand over public networks.

Based on usage of the Communication Unit 3 the Aid Organizations are able to manage their activities on a real time and perfect way and not as today over asynchronous and random working Communication links 2 like mobile networks.

### Military

A system and process to serve devices 31 within a mobile military unit (soldier or vehicle) with data through a wired or wireless Communication Unit 3. The Communication Unit 3 to which the devices 31 are attached to serves as a link between a fixed or mobile Base Station 1 (battlefield command unit, central command unit) and the devices 31 (weapons, diagnostic and control units) requiring service within the Mobile Unit 4. The Communication Unit 3 is capable of receiving and sending data intended for the devices 31 within the Mobile Unit 4 over various Communication links 2 simultaneously or sequentially.

A military force may wish to monitor its devices 31 in field operations. This could be a any type of vehicle or even a soldier with technology that can be monitored, watched and updated. This could even go so far as to monitor the actual vital health situation such as heart beat and blood pressure.

For such a scenario the information pushed and received over the flexible process within and using the Communication Unit 3 could be vital for controlling the field operations from the central command post.

### Example: Allow communication with coalition forces

A military force recognises that it needs to change the parameter or its communication devices 31 deployed in the battlefield to allow basic communication with coalition forces that use a different communication protocol. This can be solved through a simple update of the software within the communication devices 31. The Communication link 2 will be opened for a period time and then closed for the coalition forces.

### Example: Information exchange with coalition forces

The military force wishes to give specific functionality of its military equipment (usage of weapons, additional radar functionality, encryption functionality of communications) to deployed forces for a specific period of time and to different units within the battlefield. To this extent a data code is to be distributed to all of the connected military command posts, equipment and mobile units to the connected devices 31 using the Communication Unit 3.

### Example: Tactical decisions based upon weapon status

A soldier is carrying and firing a high tech weapon. The control mechanism informs the Communication Unit 3 that the ammunition is low. If this is the same for a group of soldiers the central command post may be in a position to send in reinforcements to hold and not endanger the soldiers and current position.

### Example: Tactical decisions based upon soldier status

A military force entering a battlefield operation needs all human vital body functions of deployed forces for strategic placement of reinforcement units. Depending upon the amount of fatalities the reinforcements will enter the battlefield. To this extent the data of the sensors of the vital body functions will send data over the Communication Unit 3 to the command post. At the same time when a fatality occurs the weapons of the soldier or vehicle such as a tank will be rendered inoperable through a disabling of the weapons in question.

### Example: Software update of electronic equipment

Electronic equipment deployed in the battlefield at various command posts needs to be updated with information to secure a correct functioning of the equipment (devices 31). To this extent a software update is required to be sent to each device 31 to ensure that each has the same software version. To this extent the commander gives the order to send the software to each command post and connected devices 31 using the Communication Unit 3. Further a feedback of completion of update is required.

### Public Transport Systems

A system and process to serve devices 31 within a Mobile Unit 4 in form of a public vehicle with data through a wired or wireless Communication Unit 3. The Communication Unit 3 (to which the devices 31 are attached to) serves as a link between a fixed or mobile Base Station 1 (public transport headquarters or servicing location) and the devices 31 (electronic time table devices 31, ticketing systems, information systems, transport vehicle diagnostic and control units) requiring service within the Mobile Unit 4.

The Communication Unit 3 is capable of receiving and sending data intended for the devices 31 within the moving Mobile Unit 4 over various Communication links 2 simultaneously or sequentially.

A public transport system may wish to monitor its devices 31 in usage of the public transport system. This could be within any type of vehicle that can be monitored, watched and updated.

For such a scenario the information pushed and received over the flexible process within and using the Communication Unit 3 could be vital for controlling the public transport system from a central or local operations centre.

### Example: New tariff system and ticketing printing

A public transport system may implement a new tariff system and ticketing printing. To this extent the management intends to make this alteration through a software update in each ticketing machine on each public transport vehicle. This is intended to be solved by transmitting the data to the Communication Unit 3 which then in turn distributes the data to the ticketing device 31 in each public transport vehicle.

### Example: New timetable for the driver

A public transport system may implement a new timetable information system for the drivers of the public transport vehicles. This is intended to be solved using a software update to the driver information system within each public transport vehicle. This is intended to be solved by transmitting the data to the Communication Unit 3 which then in turn distributes the data to the driver information system in each public transport vehicle.

### Example: New timetable for the passenger information system

A public transport system may implement a new timetable for the passenger information system (information at info points, announcements, etc.). This is intended to be solved using a software update to the driver information system within each public transport vehicle. This is intended to be solved by transmitting the data to the Communication Unit 3 which then in turn distributes the data to the passenger information system in each public transport vehicle.

### Example: Software update

A public transport system need to implement a software update to transport vehicle diagnostic and control units of a specific transport system (e.g. S-Bahn). In this case it may be the device 31 controlling the emergency breaking system in which the pressure applied to the breaking system needs to be altered through a software update.

## Claims

1. A method for transmitting user data from a first communication device to a second communication device over at least two different communication links, the method includes the following steps:
processing user data for transmission over at least two communication links;
transmitting said processed user data over said at least two communication links, whereby at least part of the user data is transmitted over at least two communication links.

2. The method according to claim 1, wherein the step of processing said user data includes the step of processing at least a first data portion of said user data for transmission over a first communication link and processing at least a second data portion of said user data for transmission over a second communication link; and
wherein the step of transmitting said processed user data includes the step of transmitting said first data portion over a first communication link and said second data portion over said second communication link of said at least two communication links.

3. The method according to one of the preceding claims, wherein the step of processing said user data includes the step of:
determining a segment size;
splitting the user data in data segments of the determined segment size;
determining the maximum number of data segments fitting into respective transmission units provided by each communication link to be used for transmission;
forming respective payloads for the transmission units of each communication link used for transmission.

4. The method according to claim 3, wherein the step of determining a segment size includes the step of:
determining the effective payload size of the transmission units provided by each communication link to be used for transmission;
calculating the greatest common divisor of the determined effective payload sizes and using it as the segment size.

5. The method according to claim 3 or 4, wherein the step of forming respective payloads includes the step of:
adding to the respective number of data segments header information identifying at least one of: number of data segments in transmission unit, identification of the portion of user data in transmission unit, sequence numbers of data segments in transmission unit, security information, priority information, identification of a target device, identification of a group of target devices.

6. The method according to one of the preceding claims, further including the step of receiving a communication link description, identifying at least one of the following properties: a measure of communication link reliability, a measure about expected transmission time, a measure about bandwidth, a measure about expected communication costs, an indication about duplex capabilities, a measure about the maximum payload size per transmitted transmission unit, maximum payload size per transmitted data packet.

7. The method according to claim 6, further including the step of selecting the communication links to be used for the transmission.

8. The method according to claim 7, wherein the step of selecting the communication links to be used for the transmission includes the step of:
determining available communication links;
determining from the group of available channels a set of a predetermined number of communication links having at least one of the following characteristics: channels with the highest reliability, channels with the least expected transmission time, channels with the highest bandwidth, the channels with the least expected communication costs;
using the determined set of communication links for transmitting said user data.

9. The method according to one of the preceding claims, further including the step of receiving a user data description, identifying at least one of the following: addressee of the user data, sender of the user data, priority of the user data, authentication to be used, encryption to be used, communication links to be used, packet size to be used, transmission protocols to be used, reverse communication link to be used.

10. A method for receiving user data from a first communication device by a second communication device over at least two different communication links, the method includes the following steps:
receiving transmission units via at least two communication links carrying portions of transmitted user data, whereby at least part of the user data gets received via at least two communication links;
extracting from said received transmission units data segments;
reassembling said data segments into said user data.

11. The method according to claim 10, wherein the step of reassembling said data segments includes the step:
discarding a data segment received via a first communication link, which has already been received via a second of said at least two communication links.

12. The method according to claim 10, wherein the step of reassembling said data segments includes the step:
rejecting the reception of a transmission unit from a communication link containing data segments already received via at least one other communication link.

13. The method according to one of the claims 10 to 12, further including the step of:
selecting at least two communication links of all communication links being used for the transmission of the user data for receiving the user data.

14. The method according to one of the claims 10 to 13, further including the step of:
selecting a different communication link being used for the transmission of the user data for receiving the user data, if a previously used communication link shows at least one of the following conditions: the communication link gets unavailable, the signal strength falls below a predetermined threshold, the bit error rate exceeds a predetermined threshold, the data transmission speed falls below a predetermined threshold.

15. The method according to one of the claims 10 to 14, further including the step of:
delivering the user data to at least one target device.

16. The method according to claim 15, wherein the step of delivering the user data to at least one target device includes the step of:
delaying the delivery as long as the target device is not in a predetermined state.

17. The method according to one of the claims 10 to 16, further including the step of:
receiving device data from at least one of the target devices;
sending said device data via at least one communication link.

18. Device for transmitting user data over at least two different communication links, including:
a reception unit for receiving user data to be transmitted;
a processing unit for processing said user data for transmission over at least two communication links; and
a transmission element for transmitting said processed user data over said at least two communication links, whereby at least part of the user data is transmitted over at least two communication links.

19. Device for receiving user data over at least two different communication links, including:
a reception unit for receiving transmission units via at least two communication links carrying portions of transmitted user data, whereby at least part of the user data gets received via at least two communication links;
an extraction unit for extracting from said received transmission units data segments; and
a reassembling unit for reassembling said data segments into said user data.
